(19) Europäisches Patentamt
European Patent Office
Office européen des brevets

(11) EP 4 208 355 B1

(12) FASCICULE DE BREVET EUROPEEN

(45) Date de publication et mention de la délivrance du brevet:
**21.08.2024 Bulletin 2024/34**

(21) Numéro de dépôt: **21778179.8**

(22) Date de dépôt: **03.09.2021**

(51) Classification Internationale des Brevets (IPC):
***B60C 1/00*** *(2006.01)* ***C08L 23/08*** *(2006.01)*
***C08K 3/36*** *(2006.01)* ***C08K 5/3445*** *(2006.01)*
***C08K 5/103*** *(2006.01)* ***C08K 5/14*** *(2006.01)*

(52) Classification Coopérative des Brevets (CPC):
(C-Sets disponibles)
**C08K 5/3445; B60C 1/0016; C08K 3/36;**
**C08L 23/083** (Cont.)

(86) Numéro de dépôt international:
**PCT/FR2021/051516**

(87) Numéro de publication internationale:
**WO 2022/049351 (10.03.2022 Gazette 2022/10)**

# (54) COMPOSITION DE CAOUTCHOUC A BASE D'ELASTOMERE DIENIQUE FORTEMENT SATURE

KAUTSCHUKZUSAMMENSETZUNG AUF BASIS EINES HOCHGESÄTTIGTEN DIENELASTOMERS

RUBBER COMPOSITION BASED ON A HIGHLY SATURATED DIENE ELASTOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2020 FR 2009005**

(43) Date de publication de la demande:
**12.07.2023 Bulletin 2023/28**

(73) Titulaire: **COMPAGNIE GENERALE DES ETABLISSEMENTS MICHELIN**
**63040 Clermont-Ferrand (FR)**

(72) Inventeurs:
- **PIBRE, Guillaume**
  **63040 CLERMONT-FERRAND CEDEX 9 (FR)**
- **FERRAND, Thomas**
  **63040 CLERMONT-FERRAND CEDEX 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2018/162854**
**WO-A1-2020/038762**
**WO-A1-2020/094993**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Processed by Luminess, 75001 PARIS (FR)

(Cont. page suivante)

(52) Classification Coopérative des Brevets (CPC):
(Cont.)

C-Sets
**C08L 23/083, C08K 5/3445, C08K 3/36,
C08K 5/548, C08K 5/14, C08K 5/103**

## Description

Le domaine de la présente invention est celui des compositions de caoutchouc diénique renforcées par une charge inorganique telle que la silice et utilisables notamment pour la fabrication de pneumatiques pour véhicules. Elle se rapporte plus particulièrement aux bandes de roulement de bandages pneumatiques ou non pneumatiques présentant un compromis résistance au roulement/usure amélioré.

Depuis que les économies de carburant et la nécessité de préserver l'environnement sont devenues une priorité, il est souhaitable de produire des mélanges possédant de bonnes propriétés de résistance à l'usure tout en ayant une hystérèse aussi faible que possible afin de pouvoir les mettre en oeuvre sous forme de compositions de caoutchouc utilisables pour la fabrication de divers produits semi-finis entrant, par exemple, dans la composition de bandages pneumatiques ou non-pneumatiques, tels que par exemple des bandes de roulement.

Pour réduire la résistance au roulement, il est connu d'utiliser des compositions de caoutchouc diénique renforcées par une charge inorganique, telle que la silice. Les compositions de caoutchouc diénique renforcées par une charge inorganique comprennent généralement un silane à titre d'agent de couplage, tel qu'un polysulfure ou un mercaptosilane bloqué, silane portant une fonction thiol protégée. Le silane permet de créer des interactions entre l'élastomère diénique et la charge inorganique et de favoriser la dispersion de la charge inorganique dans la composition de caoutchouc.

Par ailleurs, pour obtenir les propriétés de renforcement optimales conférées par une charge dans une composition de caoutchouc, et ainsi une haute résistance à l'usure, on sait qu'il convient d'une manière générale que cette charge soit présente dans la matrice élastomère sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice. De manière connue, le noir de carbone présente de telles aptitudes. En revanche, cela n'est en général pas le cas des charges inorganiques, en particulier des silices. En effet, pour des raisons d'affinités réciproques, ces particules de charge inorganique ont tendance à s'agglomérer entre elles, dans la matrice élastomère. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processability") plus difficile qu'en présence de noir de carbone.

Il demeure donc difficile de mettre au point des compositions, chargées avec de la silice en tant que charge, présentant à la fois une excellente résistance au roulement et une bonne résistance à l'usure.

Il a été possible d'améliorer ce compromis de performances grâce à l'emploi, dans les bandes de roulement de pneumatiques, de nouvelles compositions de caoutchouc renforcées de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant. Des bandes de roulement chargées de telles silices hautement dispersibles (notées "HD" ou "HDS" pour "highly dispersible" ou "highly dispersible silica"), utilisables dans les pneumatiques à basse résistance au roulement parfois qualifiés de "Pneus Verts" pour l'économie d'énergie offerte à l'usager ("Green Tyre concept"), ont été abondamment décrites. On se reportera notamment aux demandes de brevet EP 501 227, EP 692 492, EP 692 493, EP 735 088, EP 767 206, EP 786 493, EP 881 252, WO 99/02590, WO 99/02601, WO 99/02602, WO 99/06480, WO 00/05300, W O00/05301. Ces documents de l'art antérieur enseignent l'utilisation de silices du type HD présentant une surface spécifique BET comprise entre 100 et 250 $m^2/g$. En pratique, une silice HD à haute surface spécifique faisant référence dans le domaine des "Pneus Verts" est en particulier la silice "Zeosil 1165 MP" (surface BET égale à environ 160 $m^2/g$) commercialisée par la société Solvay. L'utilisation de cette silice "Zeosil 1165 MP" permet d'obtenir de bons compromis en matière de performance pneumatique, notamment une résistance à l'usure et une résistance au roulement satisfaisantes. WO 2020/094993 divulgue une composition de caoutchouc renforcée par de la silice ayant de bonnes propriétés de renforcement.

Néanmoins, il existe toujours un besoin d'améliorer davantage le compromis de performances que sont la résistance à l'usure et la résistance au roulement.

Poursuivant ses recherches, la Demanderesse a découvert de façon inattendue que l'utilisation combinée d'élastomère diénique fortement saturé, d'un composé 1,3-dipolaire spécifique et d'un système de réticulation radicalaire spécifique permet d'améliorer davantage le compromis de performance précité, dans des compositions chargées avec de la silice.

Ainsi, l'invention a pour objet une composition de caoutchouc à base d'au moins :

- une matrice élastomère comprenant plus de 50 pce d'un copolymère contenant des unités éthylène et des unités

1,3-diène, les unités éthylène dans le copolymère représentant plus de 50% en mole des unités monomères du copolymère,

- un composé 1,3-dipolaire répondant à la formule (I)

**Q-Sp-B** (I)

dans laquelle :

  - ◦ Q comprend un dipôle contenant au moins et de préférence un atome d'azote,
  - ◦ Sp, de préférence divalent, est un atome ou un groupe d'atomes reliant Q à B,
  - ◦ B comprend un cycle imidazole répondant à la formule (II) suivante :

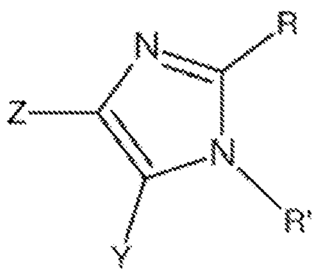

(II)

dans laquelle :

  - • 3 des 4 symboles Z, Y, R et R', identiques ou différents, représentent chacun un atome ou un groupe d'atomes, Z et Y pouvant former ensemble avec les atomes de carbone auxquels ils se rattachent un cycle,
  - • et le quatrième symbole Z, Y, R ou R' désigne un rattachement direct à Sp,

- une charge comprenant majoritairement de la silice,
- un système de réticulation comportant au moins un amorceur de polymérisation radicalaire et un co-agent de réticulation choisi dans le groupe constitué par les composés (méth)acrylates, les composés maléimides, les composés allyliques, les composés vinyliques et leurs mélanges.

La présente invention a également pour objet un article en caoutchouc comprenant une composition selon l'invention, en particulier une bande de roulement de bandage pneumatique ou non-pneumatique.

**I- DÉFINITIONS**

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la

présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Dans la présente demande, on entend par « l'ensemble des unités monomères du copolymère » ou « la totalité des unités monomères du copolymère » tous les motifs de répétitions constitutifs du copolymère qui résultent de l'insertion des monomères dans la chaîne élastomère par polymérisation. Sauf indication contraire, les teneurs en une unité monomère ou motif de répétition dans le copolymère contenant des unités éthylène et des unités 1,3-diène sont données en pourcentage molaire calculé sur la base de l'ensemble des unités monomères du copolymère.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Toutes les valeurs de température de transition vitreuse « Tg » décrite dans la présente sont mesurées de manière connue par DSC (Differential Scanning Calorimetry) selon la norme ASTM D3418 (1999).

## II- DESCRIPTION DE L'INVENTION

### II-1 Matrice élastomère

La composition du pneumatique selon l'invention a comme caractéristique essentielle de comprendre une matrice élastomère comprenant plus de 50 pce d'un copolymère contenant des unités éthylène et des unités 1,3-diène, les unités éthylène dans le copolymère représentant plus de 50% en mole des unités monomères du copolymère.

Dans la présente, le « copolymère contenant des unités éthylène et des unités 1,3-diène, les unités éthylène dans le copolymère représentant plus de 50% en mole des unités monomères du copolymère » pourra être désigné par « le copolymère » ou par « le copolymère contenant des unités éthylène et des unités 1,3-diène » pour un souci de simplification de rédaction.

Par « matrice élastomère », on entend l'ensemble des élastomères de la composition.

Par « copolymère contenant des unités éthylène et des unités 1,3-diène », on entend tout copolymère comprenant, au sein de sa structure, au moins des unités éthylène et des unités ,3-diène. Le copolymère peut ainsi comprendre des unités monomères différentes des unités éthylène et des unités ,3-diène. Par exemple, le copolymère peut comprendre également des unités alpha-oléfine, notamment des unités alpha-oléfine ayant de 3 à 18 atomes de carbone, avantageusement ayant de 3 à 6 atomes de carbone. Par exemple, les unités alpha-oléfine peuvent être choisies dans le groupe constitué par le propylène, le butène, le pentène, l'hexène ou leurs mélanges.

De manière connue, l'expression « unité éthylène » fait référence au motif $-(CH_2-CH_2)-$résultant de l'insertion de l'éthylène dans la chaîne élastomère.

De manière connue, l'expression « unité 1,3-diène » fait référence aux unités résultant de l'insertion du 1,3-diène par une addition 1,4, une addition 1,2 ou une addition 3,4 dans le cas de l'isoprène. Les unités 1,3-diène sont celles par exemple d'un 1,3-diène ou d'un mélange de 1,3-diènes, le ou les 1,3-diènes ayant de 4 à 12 atomes de carbone, tels que tout particulièrement le 1,3-butadiène et l'isoprène. De préférence, le 1,3-diène est le 1,3-butadiène.

Avantageusement, les unités éthylène dans le copolymère représentent entre 50% et 95%, de préférence entre 55% et 90%, en mole des unités monomères du copolymère.

Avantageusement, le copolymère contenant des unités éthylène et des unités 1,3-diène est un copolymère d'éthylène et de 1,3-diène, c'est-à-dire que le copolymère ne contient pas d'unités autres que l'éthylène et le 1,3-diène.

Lorsque le copolymère est un copolymère d'éthylène et d'un 1,3-diène, celui-ci contient avantageusement des unités de formule (III) et/ou (IV). La présence de motif cyclique saturé à 6 membres, 1,2-cyclohexanediyle, de formule (III) comme unité monomère dans le copolymère peut résulter d'une série d'insertions très particulières de l'éthylène et du 1,3-butadiène dans la chaîne polymère au cours de sa croissance.

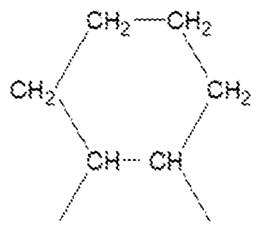

(III)

$-CH_2-CH(CH=CH_2)-$ (IV)

Par exemple, le copolymère d'éthylène et d'un 1,3-diène peut être dépourvu d'unités de formule (III). Dans ce cas, il contient de préférence des unités de formule (IV). Lorsque le copolymère d'éthylène et d'un 1,3-diène comprend des unités de formule (III) ou des unités de formule (IV) ou encore des unités de formule (III) et des unités de formule (IV), les pourcentages molaires des unités de formule (III) et des unités de formule (IV) dans le copolymère, respectivement o et p, satisfont de préférence à l'équation suivante (eq. 1), de manière plus préférentielle à l'équation (eq. 2), o et p étant calculés sur la base de l'ensemble des unités monomères du copolymère.

$$0 < o+p \leq 25 \qquad \text{(eq. 1)}$$

$$0 < o+p < 20 \qquad \text{(eq. 2)}$$

Selon l'invention, le copolymère, de préférence le copolymère d'éthylène et d'un 1,3-diène (de préférence de 1,3-butadiène), est un copolymère statistique.

Avantageusement, la masse moyenne en nombre (Mn) du copolymère, de préférence du copolymère d'éthylène et d'un 1,3-diène (de préférence de 1,3-butadiène) est comprise dans un domaine allant de 100 000 à 300 000 g/mol, de préférence de 150 000 à 250 000 g/mol.

La Mn du copolymère est déterminée de manière connue, par chromatographie d'exclusion stérique (SEC) telle que décrite ci-dessous :
La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE. Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45$\mu$m avant injection. L'appareillage utilisé est une chaîne chromatographique "WATERS Acquity" ou "WATERS Alliance". Le solvant d'élution est le tétrahydrofurane avec antioxydant de type BHT (hydroxytoluène butylé) de 250 ppm, le débit est de 1 $mL.min^{-1}$, la température des colonnes est de 35° C et la durée d'analyse de 40 min. Les colonnes utilisées sont un jeu de trois colonnes Agilent de dénomination commerciale "InfinityLab PolyPore". Le volume injecté de la solution de l'échantillon est 100 $\mu$L. Le détecteur est un réfractomètre différentiel "réfractomètre Acquity" ou "WATERS 2410" et le logiciel d'exploitation des données chromatographiques est le système "WATERS EMPOWER". Les masses molaires moyennes calculées sont relatives à une courbe d'étalonnage réalisée à partir de polystyrènes étalon.

Le copolymère peut être obtenu selon différentes méthodes de synthèse connues de l'homme du métier, notamment en fonction de la microstructure visée du copolymère. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. Le copolymère, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

Le copolymère peut être constitué d'un mélange de copolymères contenant des unités éthylène et des unités diéniques qui se différencient des uns des autres par leurs microstructures et/ou par leurs macrostructures.

Avantageusement, le taux du copolymère contenant des unités éthylène et des unités 1,3-diène dans la composition est compris dans un domaine allant de 60 à 100 pce, de préférence de 80 à 100 pce.

La matrice élastomère peut avantageusement comprendre uniquement, à titre d'élastomère, le copolymère contenant des unités éthylène et des unités 1,3-diène.

Alternativement, la matrice élastomère peut comprendre en outre un élastomère diénique différent du copolymère contenant des unités éthylène et des unités 1,3-diène (également appelé dans la présente « l'autre élastomère »). L'autre élastomère, lorsqu'il est présent, est minoritaire, c'est-à-dire qu'il représente moins 50%, 40%, 30%, 20%, voire moins de 10% en poids de la matrice élastomère. Par exemple, le taux de l'autre élastomère, dans la composition, peut être compris dans un domaine allant de 0 à 40 pce, de préférence de 0 à 20 pce.

L'autre élastomère de la matrice élastomère du pneumatique selon l'invention est choisi préférentiellement dans le groupe des élastomères diéniques fortement insaturés tels que les polybutadiènes (en abrégé "BR"), les polyisoprènes (IR) de synthèse, le caoutchouc naturel (NR), les copolymères de butadiène, les copolymères d'isoprène et les mélanges de ces élastomères. On entend en général par "élastomère diénique fortement insaturé", un élastomère diénique issu au moins en partie de monomères diènes conjugués, ayant un taux de motifs ou unités d'origine diénique (diènes conjugués) qui est supérieur à 50% (% en moles).

II-2 Composé 1, 3-dipolaire

La composition de caoutchouc conforme à l'invention comprend un composé 1,3-dipolaire. Le terme composé 1,3-dipolaire est compris selon la définition donnée par IUPAC.

Le composé 1,3-dipolaire répond à la formule (I) :

**Q-Sp-B** (I)

dans laquelle :

- Q comprend un dipôle contenant au moins et de préférence un atome d'azote,
- Sp, de préférence divalent, est un atome ou un groupe d'atomes reliant Q à B,
- B comprend un cycle imidazole répondant à la formule (II) :

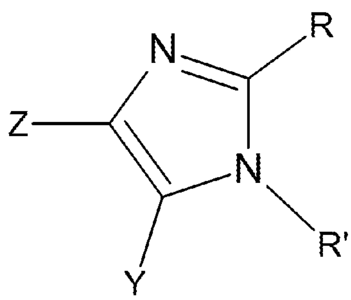

(II)

dans laquelle :

- 3 des 4 symboles Z, Y, R et R' identiques ou différents représentent chacun un atome ou un groupe d'atomes, Z et Y pouvant former ensemble avec les atomes de carbone auxquels ils se rattachent un cycle (bien entendu lorsque ni Z, ni Y ne désignent le 4ème symbole),
- et le seul quatrième symbole désigne un rattachement direct à Sp.

Selon une première variante de l'invention, R désigne un rattachement direct à Sp, auquel cas R est le 4ème symbole.

Selon cette variante, R' peut être un atome d'hydrogène ou un groupe carboné pouvant contenir au moins un hétéroatome.

Selon un mode de réalisation préférentiel de cette variante, R' représente un groupe carboné contenant de 1 à 20 atomes de carbone, préférentiellement un groupe aliphatique, plus préférentiellement un groupe alkyle qui contient de préférence de 1 à 12 atomes de carbone.

Selon une seconde variante de l'invention, R' désigne un rattachement direct à Sp, auquel cas R' est le 4ème symbole.

Selon la première ou la seconde variante, Z et Y peuvent être chacun un atome d'hydrogène.

Selon la première variante ou la seconde variante, Z et Y peuvent former ensemble avec les atomes de carbone

auxquels ils se rattachent un cycle. Le cycle formé par Z, Y et les atomes auxquels Z et Y se rattachent peut être substitué ou non et peut comporter au moins un hétéroatome. Z et Y peuvent former avec les deux atomes de carbone auxquels ils se rattachent un noyau aromatique. Dans ce cas, le cycle imidazole peut être un benzimidazole substitué ou non substitué.

Selon une troisième variante de l'invention, bien entendu lorsque Y et Z ne forment pas ensemble avec les atomes de carbone auxquels ils se rattachent un cycle, Y ou Z désigne un rattachement direct à Sp, auquel cas Y ou Z est le 4$^{ème}$ symbole.

Selon la seconde ou la troisième variante de l'invention, R représente avantageusement un atome d'hydrogène ou un groupe carboné pouvant contenir au moins un hétéroatome. Dans ce cas, R peut être un groupe de 1 à 20 atomes de carbone, de préférence un groupe aliphatique, de manière plus préférentielle un groupe alkyle contenant de préférence de 1 à 12 atomes de carbone, de manière encore plus préférentielle un méthyle.

Avantageusement, Sp est divalent.

Sp peut être un groupe contenant jusqu'à 20 atomes de carbone, lequel groupe peut contenir au moins un hétéroatome. Sp peut être un groupe aliphatique ou aromatique.

Lorsque Sp est un groupe aliphatique, Sp contient préférentiellement de 1 à 20 atomes de carbone, plus préférentiellement de 1 à 12 atomes de carbone, encore plus préférentiellement de 1 à 6 atomes de carbone, tout particulièrement de 1 à 3 atomes de carbone. Lorsque Sp est un groupe aromatique, Sp contient préférentiellement de 6 à 20 atomes de carbone, plus préférentiellement de 6 à 12 atomes de carbone.

Avantageusement, Sp est un groupe divalent choisi parmi les groupes alkylènes contenant de 1 à 20 atomes de carbone, préférentiellement de 1 à 12 atomes de carbone, plus préférentiellement de 1 à 6 atomes de carbone, encore plus préférentiellement de 1 à 3 atomes de carbone. De préférence encore, Sp O est un groupe divalent contenant de 1 à 3 atomes de carbone, de préférence le groupe méthylène.

Comme groupe divalent Sp peut aussi convenir un groupe arylène contenant de préférence de 6 à 20 atomes de carbone, plus préférentiellement de 6 à 12 atomes de carbone.

Comme composés 1,3-dipolaires , conviennent tout particulièrement les composés choisis dans le groupe constitué par les oxydes de nitrile, les imines de nitrile et les nitrones, auquel cas Q contient un motif $-C\equiv N\rightarrow O$, $-C\equiv N\rightarrow N-$ ou $-C=N(\rightarrow O)-$.

Lorsque Q comprend un motif $-C\equiv N\rightarrow O$, Q de préférence comporte, de manière plus préférentielle représente le motif répondant à la formule (V) :

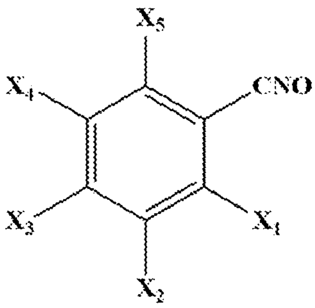

(V)

dans laquelle quatre des cinq symboles $X_1$ à $X_5$ identiques ou différents, sont chacun un atome ou un groupe d'atomes et le cinquième symbole désigne un rattachement direct à Sp, sachant que $X_1$ et $X_5$ sont tous les deux différents de H. Les quatre des cinq symboles $X_1$ à $X_5$ peuvent être des groupes aliphatiques ou aromatiques. Les groupes aliphatiques peuvent contenir de 1 à 20 atomes de carbone, préférentiellement de 1 à 12 atomes de carbone, plus préférentiellement de 1 à 6 atomes de carbone, encore plus préférentiellement de 1 à 3 atomes de carbone. Les groupes aromatiques peuvent contenir de 6 à 20 atomes de carbone, préférentiellement de 6 à 12 atomes de carbone.

$X_1$, $X_3$ et $X_5$ sont préférentiellement chacun un groupe alkyle de 1 à 6 atomes de carbone, plus préférentiellement de 1 à 3 atomes de carbone, encore plus préférentiellement un groupe méthyle ou éthyle.

Avantageusement, $X_1$, $X_3$ et $X_5$ sont identiques. En outre, $X_1$, $X_3$ et $X_5$ sont préférentiellement chacun un groupe alkyle de 1 à 6 atomes de carbone, plus préférentiellement de 1 à 3 atomes de carbone, encore plus préférentiellement un groupe méthyle ou éthyle.

De manière particulièrement avantageuse, le composé 1,3-dipolaire est le composé 2,4,6-triméthyl-3-((2-méthyl-1*H*-imidazol-1-yl)méthyl)benzonitrile oxyde répondant à la formule (Va) ou le composé 2,4,6-triéthyl-3-((2-méthyl-1*H*-imidazol-1-yl)méthyl)benzonitrile oxyde répondant à la formule (Vb) :

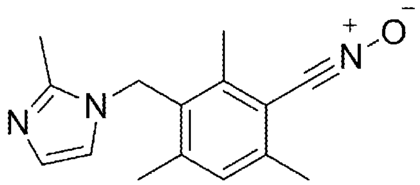

(Va)

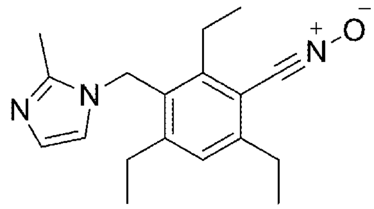

(Vb)

Lorsque Q comprend un motif -C=N(→O)-, Q peut comporter le motif répondant à la formule (VI) ou (VII) :

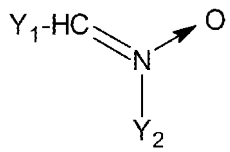

(VI)

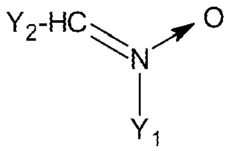

(VII)

dans laquelle :

- $Y_1$ est un groupe aliphatique, préférentiellement un groupe alkyle contenant de préférence 1 à 12 atomes de carbone, ou un groupe aromatique contenant de 6 à 20 atomes de carbone, préférentiellement un groupe alkylaryle, plus préférentiellement un groupe phényle ou tolyle, et
- $Y_2$ , comportant un rattachement direct à Sp, est un groupe aliphatique, préférentiellement un groupe alkylène contenant de préférence 1 à 12 atomes de carbone, ou un groupe aromatique contenant préférentiellement de 6 à 20 atomes de carbone et comportant sur son noyau benzénique le rattachement direct à Sp.

Dans ce cas, le rattachement direct du noyau benzénique de $Y_2$ à Sp revient à dire que Sp est un substituant du noyau benzénique de $Y_2$.

Lorsque Q comprend un motif -C=N(→O)-, le composé 1,3-dipolaire peut être le composé de formule (VIa), (VIb), (VIIa) ou (VIIb) :

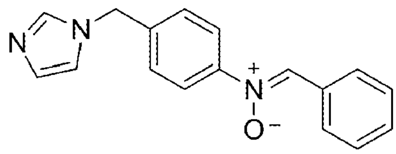

(VIa)

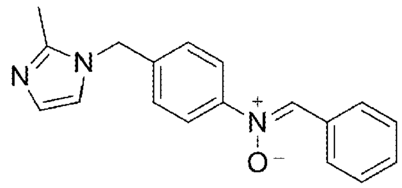

(VIb)

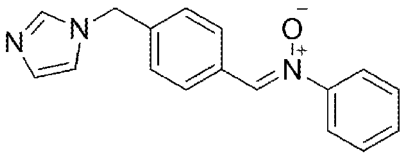

(VIIa)

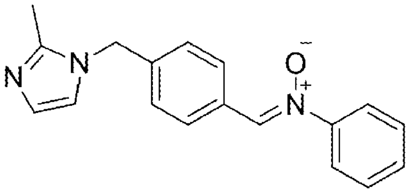

(VIIb)

Des composés 1,3-dipolaire répondant à la formule (I) peuvent aisément être synthétisés en suivant un procédé de synthèse décrit au paragraphe IV-2 ci-après.

La quantité du composé 1,3-dipolaire introduite dans la composition de caoutchouc est exprimée en équivalent molaire de cycle imidazole. Par exemple, si le composé 1,3-dipolaire contient un seul cycle imidazole de formule (II) tel que défini précédemment, à une mole de composé 1,3-dipolaire correspond une mole de cycle imidazole. Si le composé 1,3-dipolaire contient deux cycles imidazole de formule (II) tel que défini précédemment, à une mole de composé 1,3-dipolaire correspond deux moles de cycle imidazole. Dans ce dernier cas l'utilisation du composé 1,3-dipolaire selon un équivalent molaire de cycle imidazole correspond à une demi-mole de composé 1,3-dipolaire.

Selon l'invention, la quantité du composé 1,3-dipolaire dans la composition peut être comprise entre 0 et 50, de préférence entre 0,01 et 15, équivalents molaires pour 100 moles d'unités monomères constituant le copolymère. Par exemple, elle peut être comprise entre 4 et 15 équivalents molaires, par exemple entre 5 et 15 équivalents molaires. Toutefois, de manière préférentielle, la quantité de composé 1,3-dipolaire dans la composition est préférentiellement comprise entre 0 et 3 équivalents molaires, plus préférentiellement entre 0 et 2 équivalents molaires, encore plus préférentiellement entre 0 et 1 équivalent molaire, voire encore plus préférentiellement entre 0 et 0,7 équivalent molaire de cycle imidazole pour 100 moles d'unités monomères constituant le copolymère. Ces plages préférentielles permettent d'optimiser de façon plus fine le compromis entre la rigidité à cuit et l'hystérèse de la composition de caoutchouc selon son application, notamment dans un pneumatique. De préférence encore, la quantité de composé 1,3-dipolaire dans la composition est préférentiellement comprise entre 0,1 et 3 équivalents molaires, plus préférentiellement entre 0,1 et 2 équivalents molaires, encore plus préférentiellement entre 0,1 et 1 équivalent molaire, voire encore plus préférentiellement entre 0,1 et 0,7 équivalent molaire de cycle imidazole pour 100 moles d'unités monomères constituant le copolymère.

II-3 Charge

La composition selon l'invention a également comme caractéristique essentielle d'être à base d'une charge comprenant majoritairement de la silice.

La silice utilisée dans la composition selon l'invention, peut être toute silice connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment de 60 à 300 m2/g. La silice présente avantageusement une surface spécifique BET comprise dans un domaine allant de 125 à 200 $m^2/g$ et/ou une surface spécifique CTAB comprise dans un domaine allant de 140 à 170 $m^2/g$.

La surface spécifique BET de la silice est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05

à 0,17].

Les valeurs de surface spécifique CTAB de la silice ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Avantageusement, la charge comprend plus de 70% en poids, de préférence plus de 80% en poids de silice.

De préférence, le taux de silice est compris dans un domaine allant de 5 à 60 pce, de préférence de 10 à 55 pce, de préférence encore de 15 à 50 pce.

Pour coupler la silice au copolymère, on peut utiliser de manière bien connue un agent de couplage (ou agent de liaison) au moins bifonctionnel destiné à assurer une connexion suffisante, de nature chimique et/ou physique, entre la silice (surface de ses particules) et le copolymère (ci-après simplement dénommé « agent de couplage »). On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec le copolymère. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec le copolymère.

L'homme du métier peut trouver des exemples d'agent de couplage dans les documents suivants : WO 02/083782, WO 02/30939, WO 02/31041, WO 2007/061550, WO 2006/125532, WO 2006/125533, WO 2006/125534, US 6,849,754, WO 99/09036, WO 2006/023815, WO 2007/098080, WO 2010/072685 et WO 2008/055986.

L'utilisation d'un agent de couplage n'est pas obligatoire mais est préférable. Si un agent de couplage est utilisé, la teneur en agent de couplage, dans la composition selon l'invention, est avantageusement comprise entre 0,5% et 15% en poids par rapport au poids de silice. La quantité d'agent de couplage peut aisément être ajustée par l'homme du métier selon le taux de charge inorganique renforçante utilisé dans la composition de l'invention.

Avantageusement, l'agent de couplage est un organosilane choisi dans le groupe constitué par les organosilanes polysulfurés, les polyorganosiloxanes, les mercaptosilanes, les acrylosilanes et les méthacrylosilanes.

La composition selon l'invention peut comprendre des charges autres que de la silice mais cela n'est pas obligatoire. Il peut s'agir notamment de charges organiques telles que du noir de carbone.

Les noirs utilisables dans le cadre de la présente invention peuvent être tout noir conventionnellement utilisé dans les bandages pneumatiques ou non-pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés au copolymère, notamment isoprénique sous la forme d'un masterbatch (voir par exemple demandes WO 97/36724 ou WO 99/16600). Des mélanges de plusieurs noirs de carbone peuvent également être utilisés dans les taux prescrits.

Avantageusement, le noir de carbone est utilisé à un taux inférieur ou égal à 20 pce, plus préférentiellement inférieur ou égal à 10 pce (par exemple le taux de noir de carbone peut être compris dans un domaine allant de 0,5 à 20 pce, notamment allant de 1 à 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

De préférence, la charge comprend entre 80% et 99% en poids de silice et entre 1% et 20% en poids de noir de carbone.

II-4 Système de réticulation

La composition selon l'invention comprend également un système de réticulation comportant au moins un amorceur de polymérisation radicalaire et un co-agent de réticulation choisi dans le groupe constitué par les composés (méth)acrylates, les composés maléimides, les composés allyliques, les composés vinyliques et leurs mélanges.

*Amorceur de polymérisation radicalaire*

Les amorceurs de polymérisation radicalaire sont une source de radicaux libres nécessaires à la polymérisation de la composition selon l'invention. Ces composés sont bien connus de l'homme du métier et sont décrit notamment dans les documents WO 2002/22688 A1 et FR 2 899 808 A1 par exemple, ainsi que dans le document Denisov et al. (« Handbook offree radical initiators », John Wiley & Sons, 2003).

De préférence, selon l'invention, l'au moins amorceur de polymérisation radicalaire est choisi dans le groupe constitué par les peroxydes, les composés azoïques, les systèmes rédox (oxydo-réduction) et leurs mélanges, de préférence dans le groupe constitué par les peroxydes, les composés azoïques, et leurs mélanges. De préférence encore, l'au moins amorceur de polymérisation radicalaire est un peroxyde ou un mélange de plusieurs peroxydes. Il peut s'agir de tout peroxyde connu de l'homme de l'art. Parmi les peroxydes, bien connus de l'homme de l'art, il est préférable d'utiliser dans le cadre de la présente invention un peroxyde organique.

Par « peroxyde organique », on entend un composé organique, c'est-à-dire contenant du carbone, comportant un groupe -O-O- (deux atomes d'oxygène liés par une liaison covalente simple). Durant le procédé de réticulation, le peroxyde organique se décompose au niveau de sa liaison instable O-O en radicaux libres. Ces radicaux libres permettent la création des liaisons de réticulation.

Le peroxyde organique est de préférence choisi dans le groupe comprenant ou consistant en les peroxydes de dialkyle, les monoperoxycarbonates, les peroxydes de diacyle, les peroxycétales ou les peroxyesters.

De préférence, les peroxydes de dialkyle sont choisis dans le groupe comprenant ou consistant en le peroxyde de dicumyle, le peroxyde de di-t-butyle, peroxyde de t-butylcumyle, le 2,5-diméthyl-2,5-di(t-butylperoxy)hexane, le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, $\alpha,\alpha'$-di-[(t-butyl-peroxy)isopropyl] benzène, le $\alpha,\alpha'$-di-[(t-amyl-peroxy)isopropyl] benzène, le peroxyde de di-t-amyle, le 1,3,5-tri-[(t-butylperoxy)isopropyl]benzène, le 1,3-diméthyl-3-(t-butylperoxy)butanol, et le 1,3-diméthyl-3-(t -amylperoxy) butanol.

Certains monoperoxycarbonates tels que le OO-tert-butyl-O-(2-éthylhexyl) monoperoxycarbonate, OO-tert-butyl-O-isopropyl monoperoxycarbonate et OO-tert-amyl-O-2-éthyl hexyl monoperoxycarbonate, peuvent également être utilisés.

Parmi les peroxydes de diacyles, le peroxyde préféré est le peroxyde de benzoyle.

Parmi les peroxycétales, les peroxydes préférés sont choisis dans le groupe comprenant ou consistant en le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane et leurs mélanges. De préférence, les peroxyesters sont choisis dans le groupe consistant en le tert-butylperoxybenzoate, le tert-butyleperoxy-2-ethylhexanoate et le tert-butyleperoxy-3,5,5-triméthylehexanoate.

En résumé, le peroxyde organique est, de manière particulièrement préférée, choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges. De préférence encore le peroxyde organique est choisi dans le groupe constitué par dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges.

A titre d'exemple de peroxyde utilisable dans le cadre de la présente invention et disponible dans le commerce, on peut citer le « Dicup » de la société Hercules Powder Co., le « Perkadox Y12 » de la Société Noury van der Lande, le « Peroximon F40 » de la société Montecatini Edison S.p.A., le « Trigonox » de la Société Noury van der Lande, le « Varox » de la société R.T.Vanderbilt Co., ou encore le « Luperko », de la société Wallace & Tieman, Inc.

Par « composé azoïque », on entend un composé dont la structure moléculaire contient au moins une liaison -N=N- (deux atomes d'azote liés par une liaison covalente double).

De préférence, le composé azoïque est choisi dans le groupe constitué par le 2-2'-azobis(isobutyronitrile), le 2,2'-azobis(2-butanenitrile), le 4,4'-azobis(4-acide pentanoïque), le 1,1'-azobis(cyclohexanecarbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate et leurs mélanges.

A titre d'exemple de composé azoïque utilisable dans le cadre de la présente invention et disponible commercialement, on peut citer le 2-2'-azobis(isobutyronitrile) de la société Sigma-Aldrich.

Par « systèmes rédox », on entend une combinaison de composés provocant une réaction d'oxydoréduction qui engendre des radicaux.

Il peut s'agir par exemple des combinaisons de peroxydes avec des amines tertiaires (par exemple les couples: benzoyl peroxyde plus diméthylaniline); d'hydroperoxydes avec des métaux de transition (tels que le mélange cumène hydroperoxyde plus cobalt naphthénate).

Avantageusement, le taux d'amorceur radicalaire, de préférence de peroxyde organique, dans la composition selon l'invention, est compris dans un domaine allant de 0,1 à 10 pce, de préférence de 0,1 à 3 pce, de préférence encore de 0,2 à 2,5 pce.

Le taux d'amorceur de polymérisation radicalaire, dans la composition, est de préférence compris dans un domaine allant de 1 à 10% en poids, de préférence entre 1,25 et 8% en poids, de préférence entre 2 et 5% en poids, de préférence entre 3 et 4% en poids, par rapport au poids de co-agent de réticulation.

*Co-agent de réticulation*

Selon l'invention, le co-agent de réticulation est choisi dans le groupe constitué par les composés (méth)acrylates, les composés maléimides, les composés allyliques, les composés vinyliques et leurs mélanges.

De préférence, le co-agent comprend un composé (méth)acrylate, sous forme de sel métallique, ou d'ester ou sous forme polymérique.

De préférence encore, le co-agent de réticulation comprend un dérivé d'acrylate de formule (VIII) :

$$[X]_p\ A \qquad (VIII)$$

dans laquelle,

- [X]p correspond à un radical de formule (IX) :

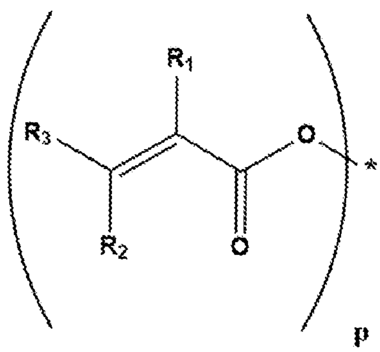

(IX)

dans laquelle,

° ◦ $R_1$, $R_2$ et $R_3$ représentent indépendamment un atome d'hydrogène ou un groupe hydrocarboné en $C_1$-$C_8$ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, $R_2$ et $R_3$ pouvant former ensemble un cycle non aromatique,

° ◦ (*) représente le point d'attachement du radical de formule (IX) à A,

- A représente un atome appartenant au groupe constitué par les métaux alcalino-terreux ou les métaux de transition, un atome de carbone, ou un groupement hydrocarboné en $C_1$-$C_{30}$ éventuellement interrompu et/ou substitué par un ou plusieurs hétéroatomes,
- A comprenant p valences libres, p ayant une valeur allant de 2 à 6,
- étant entendu que les 2 à 6 radicaux X sont identiques ou différents.

Selon l'invention, la liaison entre X et A peut être une liaison ionique ou une liaison covalente. L'homme du métier comprend bien que lorsque A représente un atome appartenant au groupe constitué par les métaux alcalino-terreux ou les métaux de transition, notamment Zn ou Mg, la liaison entre X et A est une liaison ionique. Par ailleurs, lorsque A représente un atome de carbone ou un groupement hydrocarboné en $C_1$-$C_{30}$, l'homme du métier comprend bien que la liaison entre X et A est une liaison covalente.

Par groupe alkyle cyclique, on entend un groupe alkyle comprenant un ou plusieurs cycles.

Par groupement ou chaîne hydrocarboné(e) interrompu(e) par un ou plusieurs hétéroatomes, on entend un groupe ou chaîne comprenant un ou plusieurs hétéroatomes, chaque hétéroatome étant compris entre deux atomes de carbone dudit groupe ou de ladite chaîne, ou entre un atome de carbone dudit groupe ou de ladite chaîne et un autre hétéroatome dudit groupe ou de ladite chaîne ou entre deux autres hétéroatomes dudit groupe ou de ladite chaîne.

Par groupement ou chaîne hydrocarboné(e) substitué(e) par un ou plusieurs hétéroatomes, on entend un groupe ou chaîne comprenant un ou plusieurs hétéroatomes, chaque hétéroatome étant lié au groupement ou à la chaîne hydrocarboné(e) par une liaison covalente sans interrompre le groupement ou la chaîne hydrocarboné(e).

Le ou les hétéroatomes de A peuvent être choisis dans le groupe constitué par les atomes d'oxygène, de soufre, d'azote, de silicium, de phosphore et leurs combinaisons. De préférence, le ou les hétéroatomes de A sont choisis dans le groupe constitué par atomes d'oxygène et de soufre. De préférence encore, le ou les hétéroatomes de A sont des atomes d'oxygène.

En d'autres termes, A représente avantageusement un groupement hydrocarboné en $C_4$-$C_{30}$, linéaire, ramifié ou cyclique, interrompu et/ou substitué par un ou plusieurs hétéroatomes choisis parmi les atomes d'oxygène, de soufre, d'azote, de silicium, de phosphore et leurs combinaisons, de préférence choisis dans le groupe constitué par atomes d'oxygène et de soufre. De préférence encore A représente avantageusement un groupement hydrocarboné en $C_4$-$C_{30}$, linéaire, ramifié ou cyclique, de préférence, linéaire ou ramifié, interrompu et/ou substitué par un ou plusieurs atomes d'oxygène et/ou de soufre, de préférence interrompu et/ou substitué par un ou plusieurs atomes d'oxygène.

De préférence, A représente un groupement hydrocarboné en $C_4$-$C_{30}$, linéaire, ramifié ou cyclique, de préférence linéaire ou ramifié, interrompu par un ou plusieurs atomes d'oxygène et/ou de soufre, de préférence interrompu par un ou plusieurs atomes d'oxygène. De préférence encore, A représente un groupement hydrocarboné en $C_4$-$C_{30}$, linéaire ou ramifié, interrompu par un ou plusieurs atomes d'oxygène.

Lorsque A représente un groupement hydrocarboné en $C_4$-$C_{30}$, il peut s'agir par exemple d'un groupement hydrocarboné en $C_5$-$C_{20}$, de préférence en $C_6$-$C_{16}$.

Lorsque A comprend un groupement hydrocarboné cyclique, il peut s'agir d'un groupement hydrocarboné cyclique non-aromatique ou aromatique.

Le ou les hétéroatomes des radicaux $R_1$, $R_2$, $R_3$ et A peuvent être, indépendamment les uns des autres, des atomes d'oxygène, de soufre, d'azote, de phosphore ou de silicium, de préférence des atomes d'oxygène ou d'azote.

Quelle que soit la nature du radical A, $R_1$, $R_2$ et $R_3$ peuvent représenter indépendamment les uns des autres un atome d'hydrogène, un groupement méthyle ou un groupement éthyle, de préférence $R_1$, $R_2$ et $R_3$ représentent indépendamment les uns des autres un atome d'hydrogène ou un groupement méthyle.

Avantageusement, $R_1$ peut représenter un groupement méthyle et $R_2$ et $R_3$ peuvent représenter chacun un atome d'hydrogène. Alternativement, $R_1$, $R_2$ et $R_3$ peuvent représenter chacun un atome d'hydrogène.

Le nombre de valence p dépend de la nature du radical A. Selon l'invention, p peut valoir 2, 3, 4, 5 ou 6. De préférence, p vaut 2, 3 ou 4, de préférence 2 ou 3, de préférence 2.

Avantageusement, quels que soient les groupements $R_1$, $R_2$ et $R_3$ :

- A représente un atome appartenant au groupe constitué par les métaux alcalino-terreux ou les métaux de transition, un atome de carbone ou un groupement hydrocarboné en $C_1$-$C_{13}$, de préférence en $C_1$-$C_8$,
- A comprenant p valences libres, p ayant une valeur allant de 2 à 4,
- étant entendu que les 2 à 4 radicaux X du dérivé d'acrylate de formule (VIII) sont identiques ou différents, de préférences identiques.

Selon l'invention, lorsque A représente un atome appartenant au groupe constitué par les métaux alcalino-terreux ou les métaux de transition, il peut s'agir par exemple d'un atome choisi dans le groupe constitué par Zn et Mg.

Lorsque A représente un groupement hydrocarboné en $C_1$-$C_{13}$, de préférence $C_1$-$C_8$, il peut s'agir par exemple d'un groupement hydrocarboné en $C_1$-$C_7$, de préférence en $C_1$-$C_6$.

De préférence, A représente un groupement hydrocarboné en $C_1$-$C_{13}$ choisi dans le groupe constitué par les radicaux suivants :

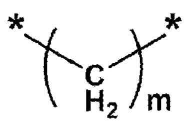,
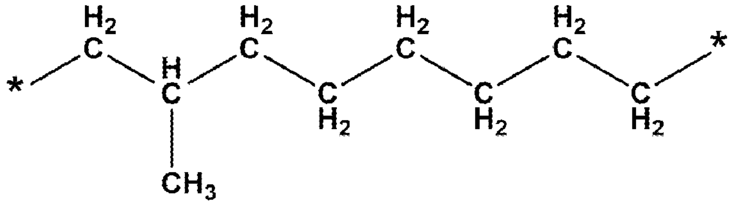,

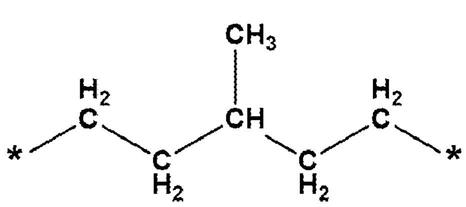,
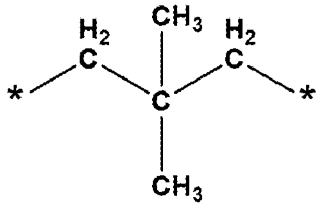,
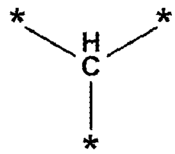,

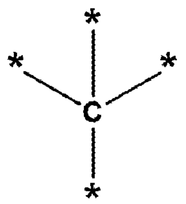,
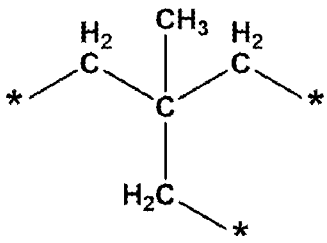
et
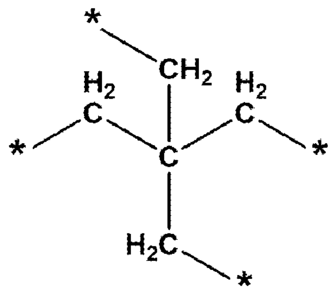

dans lesquels, m est un nombre entier allant de 1 à 13, et (*) représente le point d'attachement de A au radical de formule (IX).

Avantageusement, le groupement hydrocarboné en $C_1$-$C_{13}$ est un radical *-$(CH_2)_m$-* dans lequel, m est un nombre entier allant de 1 à 13, de préférence de 1 à 8, de préférence de 1 à 6, et (*) représente le point d'attachement de A au radical de formule (IX).

Ainsi, selon l'invention, le dérivé d'acrylate de formule (VIII) peut être choisi parmi le diméthacrylate de zinc (ZDMA), le diméthacrylate de magnésium (MgDMA), le diacrylate de zinc (ZMA), le diacrylate de magnésium (MgMA), le triméthylopropane triméthylacrylate (TMPTMA), triméthylolproprane triacrylate (TMPTA), le 1,6-hexanediol diacrylate (HDDA) et leurs mélanges.

A titre d'exemple, on trouve dans le commerce des dérivés de diacrylate tels que le diacrylate de zinc (ZDA) « DYMALINK 633 » de la société Cray Valley, le diméthacrylate de zinc (ZDMA) « DYMALINK 634 » de la société Cray Valley, le triméthylolpropane triméthacrylate (TMPTMA) « SR351 » de la société Sartomer, ou le 1,6-hexanediol diacrylate (HDDA) de la société Sigma-Aldrich.

Avantageusement, le taux du co-agent de réticulation, et de préférence le taux total de co-agent de réticulation, dans la composition selon l'invention, est compris dans un domaine allant de 1 à 20 pce, de préférence de 2 à 10 pce, de préférence entre 2 et 5 pce.

De manière avantageuse, la quantité d'amorceur de polymérisation radicalaire dans la composition est comprise dans un domaine allant de 1 à 10% en poids, de préférence entre 1,25 et 8% en poids, de préférence entre 2 et 5% en poids, de préférence entre 3 et 4% en poids, par rapport au poids de co-agent de réticulation dans la composition.

Avantageusement également, le rapport du taux de silice sur le taux du co-agent de réticulation est compris dans un domaine allant de 2 à 9, de préférence de 3 à 7.

*Soufre*

Par ailleurs, la composition selon l'invention est avantageusement exempte de soufre en tant qu'agent de vulcanisation, ou en contenir moins de 0,5 pce, de préférence moins de 0,3 pce, de préférence moins de 0,2 pce et de préférence moins de 0,1 pce. Le soufre peut être du soufre moléculaire ou provenir d'un agent donneur de soufre, tel que les alkyl phénol disulfures (APDS).

II-5 Additifs possibles

Les compositions de caoutchouc peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

II-6 Préparation des compositions de caoutchouc

Les compositions conformes à l'invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomère, la charge, les éventuels autres additifs divers, à l'exception de l'amorceur de polymérisation radicalaire. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que l'amorceur de polymérisation radicalaire. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors l'amorceur de polymérisation radicalaire, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme bande de roulement de pneumatique. Ces produits peuvent ensuite être utilisés pour la fabrication de pneumatiques, selon les techniques connues de l'homme du métier.

La réticulation de la composition peut être conduite de manière connue de l'homme du métier, par exemple à une température comprise entre 130°C et 200°C, sous pression.

Est également décrit dans la présente un procédé pour préparer la composition de caoutchouc conforme à l'invention comprenant en outre un système de réticulation comprenant les étapes suivantes :

- ajouter au cours d'une première étape dite non productive au copolymère le composé 1,3-dipolaire, la charge, en malaxant thermomécaniquement jusqu'à atteindre une température maximale comprise entre 130 et 200°C,
- refroidir l'ensemble à une température inférieure à 100°C,
- incorporer ensuite l'amorceur de polymérisation radicalaire,
- malaxer le tout jusqu'à une température maximale inférieure à 120°C.

La quantité de composé 1,3-dipolaire ajoutée est préférentiellement comprise entre 0 et 3 équivalents molaires, plus préférentiellement entre 0 et 2 équivalents molaires, encore plus préférentiellement entre 0 et 1 équivalent molaire, voire encore plus préférentiellement entre 0 et 0,7 équivalent molaire de cycle imidazole pour 100 moles d'unités monomères constituant le copolymère. Pour chacune de ces plages préférentielles, la borne inférieure est de préférence d'au moins 0,1 équivalent molaire de composé 1,3-dipolaire.

Avantageusement, le composé 1,3-dipolaire est mélangé au copolymère avant l'introduction des autres constituants de la composition de caoutchouc, notamment avant l'ajout de la charge. Le temps de contact entre le copolymère et le composé 1,3-dipolaire qui sont mélangés de façon intime, en particulier malaxés thermomécaniquement, est ajusté en fonction des conditions du mélangeage, en particulier du malaxage thermomécanique, notamment en fonction de la

température. Plus la température est élevée, plus ce temps de contact est court. Typiquement il est de 1 à 5 minutes pour une température de 100 à 130°C.

De préférence, on ajoute de préférence au moins un antioxydant au copolymère avant son introduction dans un mélangeur, notamment à la fin de la synthèse du copolymère comme cela se fait conventionnellement.

Après l'incorporation de tous les ingrédients de la composition de caoutchouc, la composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé comme composant caoutchouteux pour la confection du pneumatique.

## II-7 Articles en caoutchouc

La présente invention a également pour objet un article de caoutchouc comprenant au moins une composition selon l'invention.

Compte tenu du compromis de performances amélioré dans le cadre de la présente invention, l'article de caoutchouc est avantageusement choisi dans le groupe constitué par les bandages pneumatiques, les bandages non pneumatiques, les chenilles et les bandes transporteuses. De préférence, l'article de caoutchouc est un bandage pneumatique ou non-pneumatique.

Plus particulièrement, l'invention a également pour objet un bandage pneumatique ou non pneumatique pourvu d'une bande de roulement comprenant au moins une composition selon l'invention.

L'invention a également pour objet une chenille en caoutchouc comprenant au moins un élément en caoutchouc comprenant au moins une composition selon l'invention, l'au moins un élément en caoutchouc étant de préférence une courroie sans fin en caoutchouc ou une pluralité de patins en caoutchouc, ainsi qu'une bande transporteuse en caoutchouc comprenant une composition selon l'invention.

L'invention concerne les articles en caoutchouc précédemment décrits tant à l'état cru (c'est-à-dire, avant cuisson) qu'à l'état cuit (c'est-à-dire, après réticulation ou vulcanisation).

# III- **EXEMPLES**

## III-1 Mesures et tests utilisés

### *Détermination des masses molaires : Analyse par Chromatographie d'Exclusion*

### *Stérique des copolymères*

a) Pour les copolymères solubles à température ambiante dans le tétrahydrofuranne (THF), on a déterminé les masses molaires par chromatographie d'exclusion stérique dans le THF. On a injecté les échantillons à l'aide d'un injecteur « Waters 717 » et d'une pompe " Waters 515 HPLC " à un débit de 1 ml.min$^{-1}$ dans une série de colonnes " Polymer Laboratories ". Cette série de colonnes, placée dans une enceinte thermostatée à 45°C, est composée de :

- 1 précolonne PL Gel 5 μm,
- 2 colonnes PL Gel 5 μm Mixte C,
- 1 colonne PL Gel 5 μm-500 Å.

On a réalisé la détection à l'aide d'un réfractomètre " Waters 410 ". On a déterminé les masses molaires par calibration universelle en utilisant des étalons de polystyrène certifiés par " Polymer Laboratories " et une double détection avec réfractomètre et couplage au viscosimètre.

Sans être une méthode absolue, la SEC permet d'appréhender la distribution des masses moléculaires d'un polymère. A partir de produits étalons commerciaux de type Polystyrène les différentes masses moyennes en nombre (Mn) et en poids (Mw) peuvent être déterminées et l'indice de polymolécularité calculé (Ip = Mw/Mn).

b) Pour les copolymères insolubles à température ambiante dans le tétrahydrofuranne, les masses molaires ont été déterminées dans le 1,2,4- trichlorobenzène. On les a tout d'abord dissous à chaud (4 h 00 à 150°C), puis on les a injectés à 150°C avec un débit de 1 ml.min$^{-1}$ dans un chromatographe " Waters Alliance GPCV 2000 " équipé de trois colonnes " Styragel " (2 colonnes " HT6E " et 1 colonne " HT2 "). On a effectué la détection à l'aide d'un réfractomètre " Waters ". On a déterminé les masses molaires par calibration relative en utilisant des étalons polystyrène certifiés par " Polymer Laboratories ".

*Détermination des fractions molaires*

On se reportera à l'article « Investigation of ethylene/butadiene copolymers microstructure by 1H and 13C NMR, Llauro M. F., Monnet C., Barbotin F., Monteil V., Spitz R., Boisson C., Macromolecules 2001, 34, 6304-6311 », pour une description détaillée des techniques de RMN'H et de RMN$^{13}$C qui ont été précisément utilisées dans la présente demande pour déterminer les fractions molaires des unités éthylène, unités diéniques conjuguées et des éventuelles unités *trans*-1,2 cyclohexane.

*Analyse RMN*

L'analyse structurale ainsi que la détermination des puretés molaires des molécules de synthèses sont réalisées par une analyse RMN. Les spectres sont acquis sur un spectromètre Avance 3 400 MHz BRUKER équipé d'une sonde" large bande" BBFO-zgrad 5 mm. L'expérience RMN $^1$H quantitative, utilise une séquence simple impulsion 30° et un délai de répétition de 3 secondes entre chacune des 64 acquisitions. Les échantillons sont solubilisés dans le Diméthylsulfoxide deutéré (DMSO). Ce solvant est également utilisé pour le signal de lock. La calibration est réalisée sur le signal des protons du DMSO deutéré à 2.44ppm par rapport à une référence TMS à 0ppm. Le spectre RMN $^1$H couplé aux expériences 2D HSQC $^1$H/$^{13}$C et HMBC $^1$H/$^{13}$C permet la détermination structurale des molécules (cf tableaux d'attributions). Les quantifications molaires sont réalisées à partir du spectre RMN 1D $^1$H quantitatif.

*Mooney ML 1+4*

La mesure de plasticité Mooney se fait selon le principe suivant et conformément à la norme ASTM D-1646. Le polymère généralement cru est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

*Propriétés dynamiques (après cuisson): Essai de traction*

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 100% et 300% d'allongement notés respectivement MSA100 et MSA300. L'indice de renforcement qui est le rapport du module MSA300 sur le module MSA100, est exprimé en base 100 par rapport à la composition témoin T1. Une valeur supérieure à 100 traduit une amélioration du renforcement de la composition considérée par rapport à la composition témoin.

Les essais d'allongement rupture (AR%) et de contrainte rupture (CR) sont basés sur la norme NF ISO 37 de Décembre 2005 sur une éprouvette haltère de type H2 et sont mesurés à une vitesse de traction de 500 mm/min. L'allongement rupture est exprimé en % d'allongement. La contrainte rupture est exprimée en MPa. Ces valeurs sont exprimées en base 100 par rapport à la composition témoin T1. Une valeur supérieure à 100 traduit une amélioration des propriétés mécaniques de la composition considérée par rapport à la composition témoin.

Toutes ces mesures de traction sont effectuées dans les conditions normales de température (23$\pm$2°C) et d'hygrométrie (50$\pm$5% d'humidité relative), selon la norme française NF T 40-101 (décembre 1979).

Les propriétés dynamiques G* et tan($\delta$)max ont été mesurées sur un viscoanalyseur (Metravib VA4000), selon la norme ASTM D 5992-96. On a enregistré la réponse d'un échantillon de composition réticulée (éprouvette cylindrique de 4 mm d'épaisseur et de 400 mm$^2$ de section), soumis à une sollicitation sinusoïdale en cisaillement simple alterné, à la fréquence de 10Hz, dans les conditions définies de température par exemple à 60°C selon la norme ASTM D 1349-99. On a effectué un balayage en amplitude de déformation de 0,15 à 50% (cycle aller), puis de 50% à 0,15% (cycle retour). Les résultats exploités sont la non-linéarité (NL ou $\Delta$G*) et le facteur de perte tan($\delta$). Pour le cycle retour, on indique la valeur maximale de tan($\delta$) observée, noté tan($\delta$)max. La non-linéarité (NL ou $\Delta$G*) est la différence de module de cisaillement entre 0,15% et 50% de déformation, exprimée en MPa. La non-linéarité et tan($\delta$)max sont exprimées en base 100 par rapport à la composition témoin T1. Une valeur inférieure à 100 traduit une amélioration de l'hystérèse et donc de la résistance au roulement de la composition considérée par rapport à la composition témoin.

III-2 Synthèse du composé 1,3-dipolaire 2,4,6-triméthyl-3-((2-méthyl-1H-imidazol-1-yl)méthyl)benzonitrile oxyde

Ce composé peut être préparé selon le schéma réactionnel suivant :

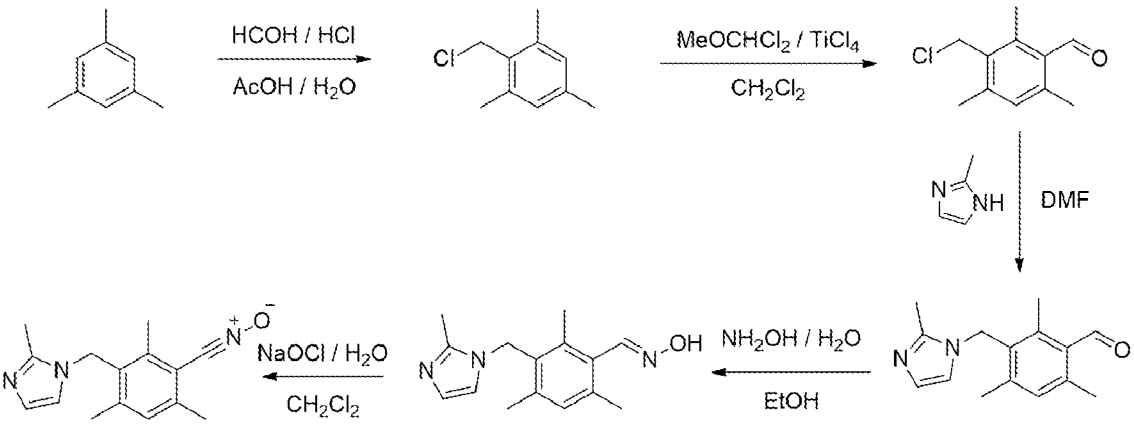


III.2-1-Synthèse du 2-(chlorométhyl)-1,3,5-triméthylbenzène:

Ce composé peut être obtenu selon une procédure décrite dans l'article Zenkevich, I. G.; Makarov, A. A.; Russian Journal of General Chemistry; vol. 77; nb. 4; (2007); p. 611 - 619 (Zhurnal Obshchei Khimii; vol. 77; nb. 4; (2007); p. 653 - 662)

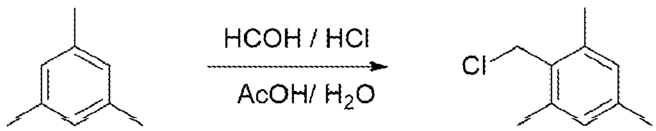


Un mélange de mésitylène (100,0 g, 0,832 mol), de para-formaldéhyde (26,2 g, 0,874 mol) et d'acide chlorhydrique (240 ml, 37 %, 2,906 mol) dans l'acide acétique (240 ml) est agité et chauffé très lentement (1,5 heures) jusqu'à 37°C. Après retour à température ambiante, le mélange est dilué par de l'eau (1,0 l) avec $CH_2Cl_2$ (200 ml), le produit est extrait par $CH_2Cl_2$ (4 fois par 50 mL). Les phases organiques sont rassemblées, puis lavées par l'eau (5 fois par 100 ml) et évaporées jusqu'à 11-12 mbar (Température du bain = 42°C). Une huile incolore (133,52 g, rendement 95 %) est obtenue. Après 15-18 heures à +4°C, l'huile a cristallisé. Les cristaux sont filtrés, lavés par de l'éther de pétrole refroidi à -18°C (40 ml), puis séchés pendant 3 à 5 heures sous pression atmosphérique à température ambiante. Un solide blanc (95,9 g, rendement 68 %) de point de fusion 39 °C est obtenu. La pureté molaire est supérieure à 96 % (RMN 1H).

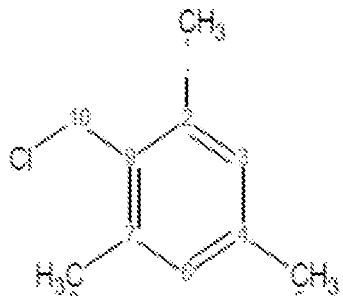

| N° | δ $^1$H (ppm) | δ $^{13}$C (ppm) |
|---|---|---|
| 1-8 | 2,27 | 19,4 |
| 2-7 | - | 136,9 |
| 3-6 | 6,91 | 128,5 |
| 4 | - | 137,4 |
| 5 | 2,15 | 20,3 |
| 9 | - | 130,5 |
| 10 | 4,69 | 41,3 |

III.2-2-Synthèse du 3-(chlorométhyl)-2,4,6-triméthylbenzaldéhyde:

Ce composé peut être obtenu selon une procédure décrite dans l'article Yakubov, A. P.; Tsyganov, D. V.; Belen'kii, L. I.; Krayushkin, M. M.; Bulletin of the Academy of Sciences of the USSR, Division of Chemical Science (English Translation); vol. 40; nb. 7.2; (1991); p. 1427 - 1432 (Izvestiya Akademii Nauk SSSR, Seriya Khimicheskaya; nb. 7; (1991); p. 1609 - 1615)

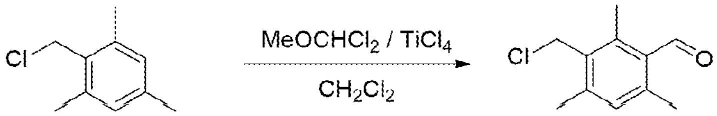


A une solution de TiCl4 (90,0 g, 0,474 mol) dans le dichlorométhane (200 ml) à 17°C est ajoutée sous argon pendant 10-12 minutes une solution du 2-(chlorométhyl)-1,3,5-triméthylbenzène (20,0 g, 0,118 mol) et de dichlorométhylméthyl éther (27,26 g, 0,237 mol) dans le dichlorométhane (200 ml). Après agitation pendant 15-20 minutes à 17-20 °C, de l'eau (1000 ml) et de la glace (500 g) sont ajoutées au milieu réactionnel. Après 10-15 minutes d'agitation, la phase organique est séparée. La phase aqueuse est extraite par $CH_2Cl_2$ (3 fois par 75 ml). Les phases organiques rassemblées sont lavées par l'eau (4 fois par 100 ml) et évaporées sous pression réduite pour conduire à un solide (Température du bain = 28°C). Le produit cible (22,74 g) est obtenu avec un rendement de 97 %. Son point de fusion est de 58 °C. La pureté molaire estimée par RMN $^1$H est de 95%mol.

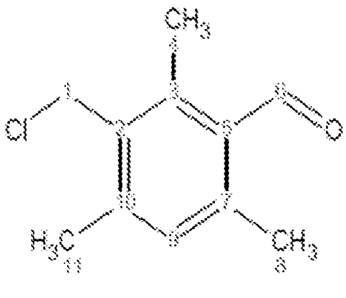

| N° | δ $^1$H (ppm) | δ $^{13}$C (ppm) |
|---|---|---|
| 1 | 4,77 | 40,6 |
| 2 | - | 132,9 |
| 3 | - | 139,5 |
| 4 | 2,51 | 14,4 |
| 5 | - | 131,4 |
| 6 | 10,43 | 194,2 |
| 7 | - | 140,1 |
| 8 | 2,41 | 19,3 |
| 9 | 6,99 | 131,2 |
| 10 | - | 142,4 |
| 11 | 2,34 | 19,8 |

III.2-3-Synthèse du 2.4.6-triméthyl-3-((2-méthyl-1H-imidazol-1-yl)méthyl) benzaldéhyde:

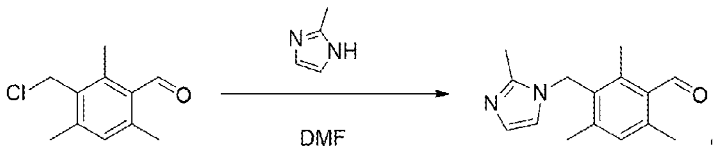


Un mélange de 3-(chlorométhyl)-2,4,6-triméthylbenzaldéhyde (10,0 g, 0,051 mol) et d'imidazole (10,44 g, 0,127 mol) dans le DMF (10 ml) est agité à 80°C pendant une heure.

Après retour à 40-50°C, le mélange est dilué par l'eau (200ml), et agité pendant 10 minutes. Le précipité obtenu est filtré et lavé sur le filtre par l'eau (4 fois par 25 ml) puis séché à température ambiante. Un solide blanc (7,92 g, rendement 64 %) de point de fusion de 161 °C est obtenu. La pureté molaire est 91 % (RMN $^1H$).

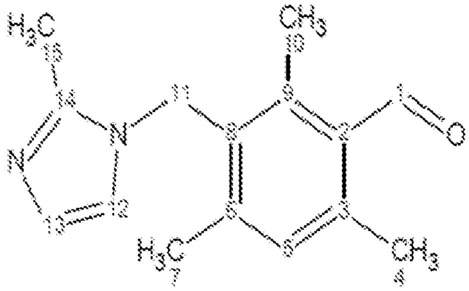

| N° | δ $^1H$ (ppm) | δ $^{13}C$ (ppm) |
|---|---|---|
| 1 | 10,45 | 194,2 |
| 2 | - | 131,5 |
| 3 | - | 139,5 |
| 4 | 2,44 | 19,6 |
| 5 | 7,04 | 131,2 |
| 6 | - | 142,5 |
| 7 | 2,19 | 19,5 |
| 8 | - | 131 |
| 9 | - | 139,5 |
| 10 | 2,34 | 14,6 |
| 11 | 5,02 | 42,5 |
| 12 | 6,24 | 116,9 |
| 13 | 6,59 | 125,9 |
| 14 | - | 143,5 |
| 15 | 2,32 | 12,7 |

<u>III.2-4-Synthèse du 2,4,6-triméthyl-3-((2-méthyl-1H-imidazol-1-yl)méthyl)benzaldéhyde oxime:</u>

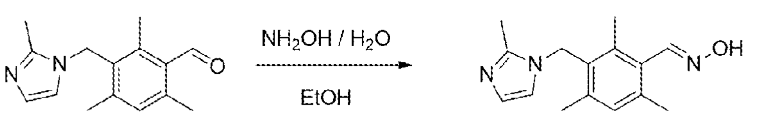


A une solution de 2,4,6-triméthyl-3-((2-méthyl-1H-imidazol-1-yl)méthyl) benzaldéhyde (20.3 g, 0,084mol) dans EtOH (110 ml) à 40°C, est ajoutée une solution aqueuse d'hydroxylamine (809 g, 0,134 mol, 50 % dans l'eau, Aldrich) dans EtOH (10 ml). Le milieu réactionnel est agité pendant 2,5 heures à une température de 50 à 55°C. Après retour à 23°C, le précipité obtenu est filtré et lavé deux fois sur le filtre par un mélange EtOH/$H_2O$ (10 ml/15 ml) et séché pendant 15 à 20 heures sous pression atmosphérique à température ambiante. Un solide blanc (19.57 g, rendement 91 %) de point de fusion de 247°C est obtenu. La pureté molaire est supérieure à 87 % (RMN $^1H$).

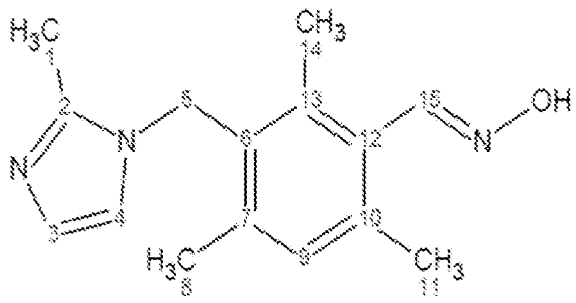

| N° | δ $^1$H (ppm) | δ $^{13}$C (ppm) |
|---|---|---|
| 1 | 2,31 | 12,7 |
| 2 | - | 143,4 |
| 3 | 6,58 | 125,8 |
| 4 | 6,22 | 116,9 |
| 5 | 4,97 | 43,2 |
| 6 | - | 129,3 |
| 7 | - | 136,2 |
| 8 | 2,23 | 20,2 |
| 9 | 6,97 | 130 |
| 10 | - | 137,3 |
| 11 | 2,15 | 19,1 |
| 12 | - | 129,1 |
| 13 | - | 136,1 |
| 14 | 2,11 | 15,9 |
| 15 | 8,25 | 147,4 |
| OH | 11,11 | - |

III.2-5-Synthèse du 2.4.6-triméthyl-3-((2-méthyl-1H-imidazol-1-yl)méthyl)bcnzonitrilc oxyde:

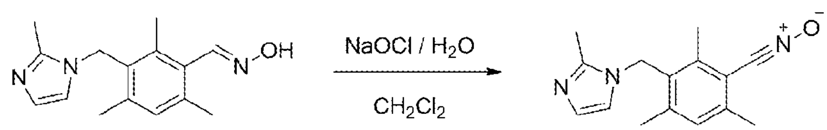


A un mélange de 2,4,6-triméthyl-3-((2-méthyl-1H-imidazol-1-yl)méthyl)benzaldéhyde oxime (8,80 g, 0,034 mol) dans $CH_2Cl_2$ (280 ml) à 6°C est ajoutée goutte à goutte une solution aqueuse de NaOCl (4 % de chlore actif, Aldrich, 49 ml) pendant 5 minutes. La température du milieu réactionnel est maintenue entre 6 et 8°C. Le milieu réactionnel est ensuite agité pendant 2 heures de 8°C à 21°C. La phase organique est séparée. La phase organique est lavée par l'eau (3 fois par 50 ml). Après concentration sous pression réduite (température du bain = 22-23°C, 220 mbar), de l'éther de pétrole (10 ml) est ajouté, le solvant est évaporé jusqu'à 8-10 ml, et la solution est maintenue à - 18°C pendant 10-15 heures de façon à obtenir un précipité. Le précipité est filtré et lavé sur le filtre par le mélange de $CH_2Cl_2$ / éther de pétrole (2 ml / 6 ml) puis par l'éther de pétrole (2 fois 10 ml) et enfin séché pendant 10-15 heures sous pression atmosphérique à température ambiante. Un solide blanc (5,31 g, rendement 61 %) de point de fusion de 139 °C est obtenu.

La pureté molaire est supérieure à 95 % mol (RMN $^1$H).

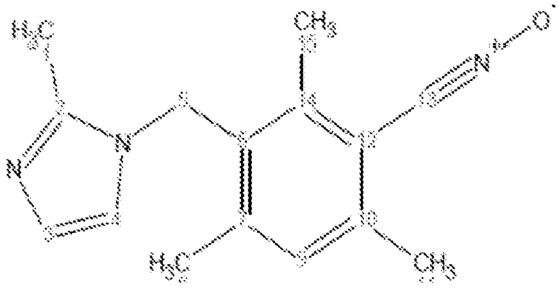

| N° | δ $^1$H (ppm) | δ $^{13}$C (ppm) |
|---|---|---|
| 1 | 2,3 | 12,6 |
| 2 | - | 143,6 |
| 3 | 6,59 | 126,1 |
| 4 | 6,27 | 117,1 |
| 5 | 4,99 | 43 |
| 6 | - | 130,6 |
| 7 | - | 140,7 |
| 8 | 2,16 | 19,2 |
| 9 | 7,12 | 128,9 |
| 10 | - | 141 |
| 11 | 2,34 | 20 |
| 12 | - | 112,1 |
| 13 | - | NI |
| 14 | - | 140,8 |
| 15 | 2,28 | 17,7 |

III-3 Préparation des compositions

Dans les exemples qui suivent, les compositions caoutchouteuses ont été réalisées comme décrit au point II.6 ci-dessus. En particulier, on procède pour la fabrication de ces compositions de la manière suivante : on introduit dans un mélangeur interne (taux de remplissage final : environ 70% en volume), dont la température initiale de cuve est d'environ 110° C, l'élastomère, le cas échéant le composé 1,3-dipolaire qui est malaxé seul avec l'élastomère pendant environ 2 minutes à 110° C, puis la silice, l'agent de couplage, le co-agent de réticulation, ainsi que les divers autres ingrédients à l'exception du peroxyde. On conduit alors un travail thermomécanique (phase non-productive) en une étape, qui dure environ 5 à 6 minutes, jusqu'à atteindre une température maximale de « tombée » de 160° C. On récupère le mélange ainsi obtenu, on le refroidit puis on incorpore le peroxyde sur un mélangeur (homo-finisseur) à 23° C, en mélangeant le tout (phase productive) pendant un temps approprié (par exemple entre 5 et 12 min).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C. Le temps de réticulation appliqué, $t'_c(90)$, est le temps nécessaire pour que le couple de la composition atteigne 90% du couple maximum de la composition. Les couples de la composition sont mesurés à 150°C avec un rhéomètre à chambre oscillante, selon la norme DIN 53529 - partie 3 (juin 1983). $t'_c(90)$, est déterminé selon la norme NF T 43-015 pour chacune des compositions. D'une composition à une autre, il varie environ de 20 à 40 minutes.

III-4 Essais de compositions de caoutchouc

Les exemples présentés ci-dessous ont pour objet de comparer le compromis de performance entre le renforcement, la contrainte rupture et la résistance au roulement, d'une composition conforme à la présente invention (C1) avec trois compositions témoin (T1 à T3).

Le Tableau 1 présente les compositions testées (en pce), ainsi que les résultats obtenus.

Les compositions témoins diffèrent de la composition C1 conforme à l'invention en ce qu'elles ne comprennent pas de composé 1,3-dipolaire et/ou de co-agent de réticulation conforme(s) à l'invention.

[Tableau 1]

| Composants | **T1** | **T2** | **T3** | **C1** |
|---|---|---|---|---|
| EBR(1) | 100 | 100 | 100 | 100 |
| Composé 1,3-dipolaire(2) | - | 2.1 | - | 2.1 |
| Silice(3) | 30 | 30 | 30 | 30 |
| Agent de couplage(4) | 3 | 3 | 3 | 3 |
| Peroxyde(5) | 1.6 | 1.6 | 1.6 | 1.6 |

(suite)

| Composants | **T1** | **T2** | **T3** | **C1** |
|---|---|---|---|---|
| Co-agent de réticulation(6) | - | - | 5 | 5 |
| **Propriétés** | | | | |
| MSA300/MSA100 | 100 | 111 | 310 | 329 |
| CR à 23°C | 100 | 93 | 176 | 162 |
| NL à 60°C | 100 | 41 | 118 | 25 |
| (1) Elastomère à 79% en mole d'unité éthylène, 7% en mole d'unité 1,2-cyclohexanediyle, 8% en mole de motif 1,2, 6% en mole de motif 1,4 ; Mooney à 100°C : 60 ; Mn : 156600 g/mol<br>(2) Composé 1,3-dipolaire dont la synthèse est décrite ci-dessus dans le paragraphe IV.2 (2,4,6-triméthyl-3-((2-méthyl-1H-imidazol-1-yl)méthyl)benzonitrile oxyde)<br>(3) Silice « Zeosil 1165MP » de la société Solvay<br>(4) Silane liquide triethoxysilylpropyltetrasulfure (TESPT) « Si69 » de la société Evonik<br>(5) 1,1-bis(tert-butylperoxy)-3,5,5-trimethylcyclohexane « Luperox 231 XL40 » de la société Arkema<br>(6) Hexanediol diacrylate (HDDA) « SR238 » de la société Sartomer | | | | |

Les résultats présentés dans le Tableau 1 ci-dessus montrent que la combinaison spécifique d'un composé 1,3-dipolaire et d'un co-agent de réticulation conformes à l'invention dans une composition à base d'un élastomère diénique fortement saturé réticulé au peroxyde permet d'améliorer fortement le renforcement de la composition et la résistance au roulement, tout en présentant une contrainte rupture améliorée par rapport à la composition témoin T1.

Les compositions conformes à l'invention sont utiles pour de nombreuses applications dans le domaine des bandages pneumatiques ou non pneumatiques, en particulier dans des bandes de roulement pour lesquelles un bon compromis entre les performances de renforcement, de contrainte rupture et de résistance au roulement résistance au roulement est souhaité.

## Revendications

**1.** Composition de caoutchouc à base d'au moins :

- une matrice élastomère comprenant plus de 50 pce d'un copolymère contenant des unités éthylène et des unités 1,3-diène, les unités éthylène dans le copolymère représentant plus de 50% en mole des unités monomères du copolymère,
- un composé 1,3-dipolaire répondant à la formule (I)

**Q-Sp-B** (I)

dans laquelle :

◦ Q comprend un dipôle contenant au moins et de préférence un atome d'azote,
◦ Sp, de préférence divalent, est un atome ou un groupe d'atomes reliant Q à B,
◦ B comprend un cycle imidazole répondant à la formule (II) suivante

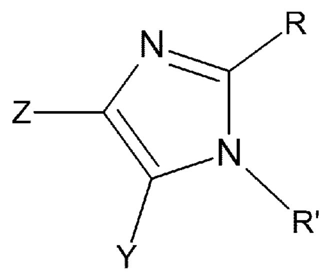

(II)

dans laquelle :

• 3 des 4 symboles Z, Y, R et R', identiques ou différents, représentent chacun un atome ou un groupe d'atomes, Z et Y pouvant former ensemble avec les atomes de carbone auxquels ils se rattachent un cycle,
• et le quatrième symbole Z, Y, R ou R' désigne un rattachement direct à Sp,

- une charge comprenant majoritairement de la silice,
- un système de réticulation comportant au moins un amorceur de polymérisation radicalaire et un co-agent de réticulation choisi dans le groupe constitué par les composés (méth)acrylates, les composés maléimides, les composés allyliques, les composés vinyliques et leurs mélanges.

**2.** Composition selon la revendication 1, dans laquelle le copolymère contenant des unités éthylène et des unités 1,3-diène est un copolymère d'éthylène et de 1,3-diène.

**3.** Composition selon l'une quelconque des revendications précédentes, dans laquelle R' désigne un rattachement direct à Sp, Z et Y sont chacun un atome d'hydrogène, et R représente un atome d'hydrogène ou un groupe carboné pouvant contenir au moins un hétéroatome et contenant de préférence de 1 à 20 atomes de carbone.

**4.** Composition selon l'une quelconque des revendications précédentes, dans laquelle Sp est un groupe contenant jusqu'à 20 atomes de carbone et pouvant contenir au moins un hétéroatome.

**5.** Composition selon l'une quelconque des revendications précédentes, dans laquelle le composé 1,3-dipolaire est choisi dans le groupe constitué par les oxydes de nitrile, les imines de nitrile et les nitrones.

**6.** Composition selon l'une quelconque des revendications précédentes, dans laquelle Q comporte, de préférence représente le motif répondant à la formule (V) :

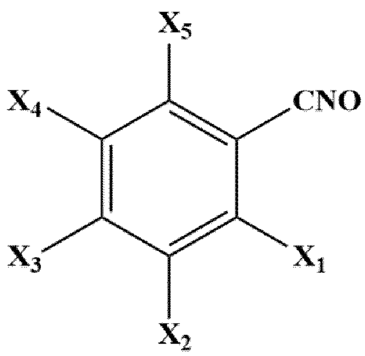

(V)

dans laquelle :
quatre des cinq symboles $X_1$ à $X_5$ identiques ou différents, sont chacun un atome ou un groupe d'atomes, préférentiellement un groupe aliphatique ou un groupe aromatique, et le cinquième symbole désigne un rattachement direct à Sp, sachant que $X_1$ et $X_5$ ne sont pas des atomes d'hydrogène.

**7.** Composition selon l'une quelconque des revendications précédentes, dans laquelle le composé 1,3-dipolaire est le 2,4,6-triméthyl-3-((2-méthyl-1H-imidazol-1-yl)méthyl)benzonitrile oxyde ou le 2,4,6-triéthyl-3-((2-méthyl-1H-imidazol-1-yl)méthyl)benzonitrile oxyde, de préférence le 2,4,6-triméthyl-3-((2-méthyl-IH-imidazol-1-yl)méthyl)benzonitrile oxyde.

**8.** Composition selon l'une quelconque des revendications précédentes, dans laquelle le taux du composé 1,3-dipolaire est compris entre 0,1 et 3 équivalents molaires, préférentiellement entre 0,1 et 2 équivalents molaires, de cycle imidazole pour 100 moles d'unités monomères constituant le copolymère.

**9.** Composition selon l'une quelconque des revendications précédentes, dans laquelle l'amorceur de polymérisation radicalaire est un peroxyde organique choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzène et leurs mélanges, de préférence dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzène et leurs mélanges.

**10.** Composition selon l'une quelconque des revendications précédentes, dans laquelle le taux de l'amorceur de polymérisation radicalaire est compris dans un domaine allant de 0,1 à 3 pce, de préférence de 0,2 à 2,5 pce.

**11.** Composition selon l'une quelconque des revendications précédentes, dans laquelle le co-agent de réticulation comprend un dérivé d'acrylate de formule (VIII) :

$$[X]_p A \qquad \text{(VIII)}$$

dans laquelle :

◦ [X]p correspond à un radical de formule (IX) :

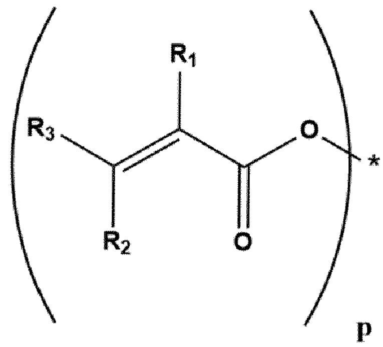

(IX)

dans laquelle,

• $R_1$, $R_2$ et $R_3$ représentent indépendamment un atome d'hydrogène ou un groupe hydrocarboné en $C_1$-$C_8$ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, $R_2$ et $R_3$ pouvant former ensemble un cycle non aromatique ,
• (*) représente le point d'attachement du radical de formule (IX) à A,

◦ A représente un atome appartenant au groupe constitué par les métaux alcalino-terreux ou les métaux de transition, un atome de carbone, ou un groupement hydrocarboné en $C_1$-$C_{30}$ éventuellement interrompu et/ou substitué par un ou plusieurs hétéroatomes,
◦ A comprenant p valences libres, p ayant une valeur allant de 2 à 6,
◦ étant entendu que les 2 à 6 radicaux X sont identiques ou différents.

**12.** Composition selon la revendication 11, dans laquelle dans le dérivé d'acrylate de formule (VIII) :

◦ A représente un atome appartenant au groupe constitué par les métaux alcalino-terreux ou les métaux de transition, un atome de carbone ou un groupement hydrocarboné en $C_1$-$C_{13}$,
◦ A comprenant p valences libres, p ayant une valeur allant de 2 à 4,
◦ étant entendu que les 2 à 4 radicaux X sont identiques ou différents.

**13.** Composition selon la revendication 11 ou 12, dans laquelle $R_1$, $R_2$ et $R_3$ représentent indépendamment les uns des autres un atome d'hydrogène, un groupement méthyle ou un groupement éthyle.

**14.** Composition selon l'une quelconque des revendications précédentes, dans laquelle le taux du co-agent de réticulation est compris dans un domaine allant de 1 à 20 pce, de préférence de 2 à 10 pce, de préférence entre 2 et 5 pce.

**15.** Bandage pneumatique ou non pneumatique comprenant une composition telle que définie à l'une quelconque des revendications 1 à 14, de préférence présente dans la bande de roulement du bandage.

**Patentansprüche**

**1.** Kautschukzusammensetzung auf Basis von mindestens:

- einer Elastomermatrix, umfassend mehr als 50 phe eines Copolymers, das Ethylen-Einheiten und 1,3-Dien-Einheiten enthält, wobei die Ethylen-Einheiten in dem Copolymer mehr als 50 Mol-% der Monomereinheiten des Copolymers ausmachen,
- einer 1,3-dipolaren Verbindung, die der Formel (I) entspricht:

**Q-Sp-B** (I)

wobei:

o Q einen Dipol, der mindestens und vorzugsweise ein Stickstoffatom enthält, umfasst,
o Sp, das vorzugsweise zweiwertig ist, für ein Atom oder eine Gruppe von Atomen, das bzw. die Q mit B verbindet, steht,
o B einen Imidazolring umfasst, der der folgenden Formel (II) entspricht:

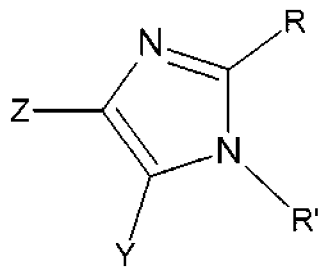

(II)

wobei:
• 3 der 4 Symbole Z, Y, R und R' gleich oder verschieden sind und jeweils für ein Atom oder eine Gruppe von Atomen stehen, wobei Z und Y zusammen mit den Kohlenstoffatomen, an die sie gebunden sind, einen Ring bilden können,
• und das vierte Symbol Z, Y, R bzw. R' eine direkte Verknüpfung mit Sp bezeichnet,

- einem Füllstoff, der hauptsächlich Kieselsäure umfasst,
- einem Vernetzungssystem, umfassend mindestens einen Radikalpolymerisationsinitiator und ein Co-Vernetzungsmittel, das aus der Gruppe bestehend aus (Meth)acrylatverbindungen, Maleinimidverbindungen, Allylverbindungen, Vinylverbindungen und Mischungen davon ausgewählt ist.

**2.** Zusammensetzung nach Anspruch 1, wobei es sich bei dem Copolymer, das Ethylen-Einheiten und 1,3-Dien-Einheiten enthält, um ein Copolymer von Ethylen und 1,3-Dien handelt.

**3.** Zusammensetzung nach einem der vorhergehenden Ansprüche, wobei R' für eine direkte Verknüpfung mit Sp steht, Z und Y jeweils für ein Wasserstoffatom stehen und R für ein Wasserstoffatom oder eine auf Kohlenstoff basierende Gruppe, die mindestens ein Heteroatom enthalten kann und vorzugsweise 1 bis 20 Kohlenstoffatome enthält, steht.

**4.** Zusammensetzung nach einem der vorhergehenden Ansprüche, wobei Sp für eine Gruppe steht, die bis zu 20 Kohlenstoffatome enthält und mindestens ein Heteroatom enthalten kann.

**5.** Zusammensetzung nach einem der vorhergehenden Ansprüche, wobei die 1,3-dipolare Verbindung aus der Gruppe bestehend aus Nitriloxiden, Nitriliminen und Nitronen ausgewählt ist.

**6.** Zusammensetzung nach einem der vorhergehenden Ansprüche, wobei Q die Einheit der Formel (V) umfasst und vorzugsweise dafür steht:

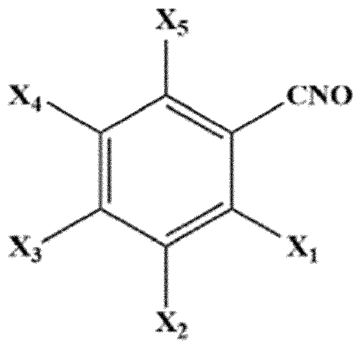

(V)

wobei:
vier der fünf Symbole $X_1$ bis $X_5$ gleich oder verschieden sind und jeweils für ein Atom oder eine Gruppe von Atomen, vorzugsweise eine aliphatische Gruppe oder eine aromatische Gruppe, stehen und das fünfte Symbol eine direkte Verknüpfung mit Sp bezeichnet, mit der Maßgabe, dass $X_1$ und $X_5$ nicht für Wasserstoffatome stehen.

**7.** Zusammensetzung nach einem der vorhergehenden Ansprüche, wobei es sich bei der 1,3-dipolaren Verbindung um 2,4,6-Trimethyl-3-((2-methyl-lH-imidazol-1-yl)methyl)benzonitriloxid oder 2,4,6-Triethyl-3-((2-methyl-lH-imidazol-1-yl)methyl)benzonitriloxid, vorzugsweise 2,4,6-Trimethyl-3-((2-methyl-1H-imidazol-1-yl)methyl)benzonitriloxid, handelt.

**8.** Zusammensetzung nach einem der vorhergehenden Ansprüche, wobei der Gehalt an 1,3-dipolarer Verbindung zwischen 0,1 und 3 Moläquivalenten, vorzugsweise zwischen 0,1 und 2 Moläquivalenten, Imidazolring auf 100 mol Monomereinheiten, aus denen das Copolymer aufgebaut ist, liegt.

**9.** Zusammensetzung nach einem der vorhergehenden Ansprüche, wobei es sich bei dem Radikalpolymerisationsinitiator um ein organisches Peroxid handelt, das aus der Gruppe bestehend aus Dicumylperoxid, Aryl- oder Diarylperoxiden, Diacetylperoxid, Benzoylperoxid, Dibenzoylperoxid, Di-tert-butylperoxid, tert-Butylcumylperoxid, 2,5-Bis(tert-butylperoxy)-2,5-dimethylhexan, n-Butyl-4,4'-di(tert-butylperoxy)valerat, OO-(t-Butyl)-O-(2-ethylhexyl)monoperoxycarbonat, tert-Butylperoxyisopropylcarbonat, tert-Butylperoxybenzoat, tert-Butylperoxy-3,5,5-trimethylhexanoat, 1,3(4)-Bis(tert-butylperoxyisopropyl)benzol und Mischungen davon, vorzugsweise aus der Gruppe bestehend aus Dicumylperoxid, n-Butyl-4,4'-di(tert-butylperoxy)-valerat, OO-(t-Butyl)-O-(2-ethylhexyl)monoperoxycarbonat, tert-Butylperoxyisopropylcarbonat, tert-Butylperoxybenzoat, tert-Butylperoxy-3,5,5-trimethylhexanoat, 1,3(4)-Bis(tert-butylperoxyisopropyl)benzol und Mischungen davon, ausgewählt ist.

**10.** Zusammensetzung nach einem der vorhergehenden Ansprüche, wobei der Gehalt an Radikalpolymerisationsinitiator in einem Bereich von 0,1 bis 3 phe, vorzugsweise von 0,2 bis 2,5 phe, liegt.

**11.** Zusammensetzung nach einem der vorhergehenden Ansprüche, wobei das Co-Vernetzungsmittel ein Acrylatderivat der Formel (VIII) umfasst:

$$\mathbf{[X]_p\ A} \qquad \text{(VIII)}$$

wobei:

- [X]p einem Rest der Formel (IX) entspricht:

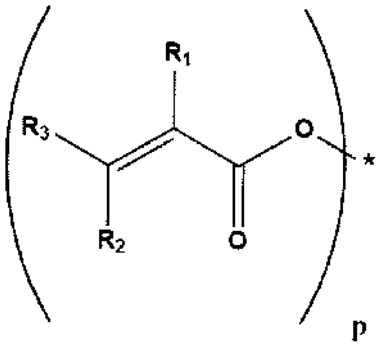

(IX)

in der

- $R_1$, $R_2$ und $R_3$ unabhängig für ein Wasserstoffatom oder eine $C_1$-$C_8$-Kohlenwasserstoffgruppe, die aus der Gruppe bestehend aus linearen, verzweigten oder cyclischen Alkylgruppen, Alkylarylgruppen, Arylgruppen und Aralkylgruppen ausgewählt ist und gegebenenfalls durch ein oder mehrere Heteroatome unterbrochen ist, stehen, wobei $R_2$ und $R_3$ zusammen einen nichtaromatischen Ring bilden können,
- (*) für den Anbindungspunkt des Rests der Formel (IX) an A steht,

◦ A für ein Atom, das zu der Gruppe bestehend aus Erdalkalimetallen oder Übergangsmetallen gehört, ein Kohlenstoffatom oder eine $C_1$-$C_{30}$-Kohlenwasserstoffgruppe, die gegebenenfalls durch ein oder mehrere Heteroatome unterbrochen und/oder substituiert ist, steht,
◦ A p freie Valenzen umfasst, wobei p einen Wert im Bereich von 2 bis 6 hat,
◦ mit der Maßgabe, dass die 2 bis 6 Reste X gleich oder verschieden sind.

**12.** Zusammensetzung nach Anspruch 11, wobei in dem Acrylatderivat der Formel (VIII):

◦ A für ein Atom, das zu der Gruppe bestehend aus Erdalkalimetallen oder Übergangsmetallen gehört, ein Kohlenstoffatom oder eine $C_1$-$C_{13}$-Kohlenwasserstoffgruppe steht,
◦ A p freie Valenzen umfasst, wobei p einen Wert im Bereich von 2 bis 4 hat,
◦ mit der Maßgabe, dass die 2 bis 4 Reste X gleich oder verschieden sind.

**13.** Zusammensetzung nach Anspruch 11 oder 12, wobei $R_1$, $R_2$ und $R_3$ unabhängig voneinander für ein Wasserstoffatom, eine Methylgruppe oder eine Ethylgruppe stehen.

**14.** Zusammensetzung nach einem der vorhergehenden Ansprüche, wobei der Gehalt an Co-Vernetzungsmittel in einem Bereich von 1 bis 20 phe, vorzugsweise von 2 bis 10 phe, vorzugsweise zwischen 2 und 5 phe, liegt.

**15.** Luftreifen oder Vollreifen, umfassend eine Zusammensetzung gemäß einem der Ansprüche 1 bis 14, die vorzugsweise in der Lauffläche des Reifens vorliegt.

## Claims

**1.** Rubber composition based on at least:

- an elastomer matrix comprising more than 50 phr of a copolymer containing ethylene units and 1,3-diene units, the ethylene units in the copolymer representing more than 50 mol% of the monomer units of the copolymer,
- a 1,3-dipolar compound corresponding to the formula (I)

**Q-Sp-B** (I)

in which:

◦ Q comprises a dipole containing at least and preferably one nitrogen atom,
◦ Sp, which is preferably divalent, is an atom or a group of atoms connecting Q to B,

◦ B comprises an imidazole ring corresponding to the following formula (II)

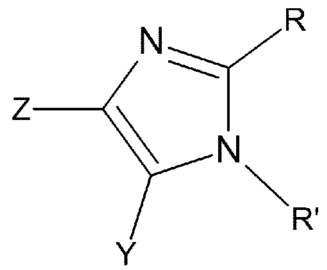

(II)

in which:

- three of the four symbols Z, Y, R and R', which are identical or different, each represent an atom or a group of atoms, it being possible for Z and Y to form, together with the carbon atoms to which they are attached, a ring,
- and the fourth symbol Z, Y, R or R' denotes a direct attachment to Sp,

- a filler comprising predominantly silica,
- a crosslinking system comprising at least one radical polymerization initiator, and a co-crosslinking agent selected from the group consisting of (meth)acrylate compounds, maleimide compounds, allyl compounds, vinyl compounds and mixtures thereof.

**2.** Composition according to claim 1, wherein the copolymer containing ethylene units and 1,3-diene units is a copolymer of ethylene and of 1,3-diene.

**3.** Composition according to either one of the preceding claims, wherein R' denotes a direct attachment to Sp, Z and Y are each a hydrogen atom, and R represents a hydrogen atom or a carbon-based group which can contain at least one heteroatom and preferably containing from 1 to 20 carbon atoms.

**4.** Composition according to any one of the preceding claims, wherein Sp is a group containing up to 20 carbon atoms and which can contain at least one heteroatom.

**5.** Composition according to any one of the preceding claims, wherein the 1,3-dipolar compound is selected from the group consisting of nitrile oxides, nitrile imines and nitrones.

**6.** Composition according to any one of the preceding claims, wherein Q comprises, preferably represents, the unit corresponding to the formula (V):

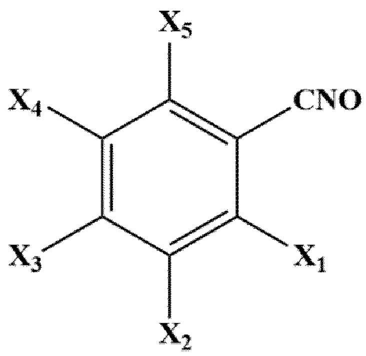

(V)

in which:
four of the five symbols $X_1$ to $X_5$, which are identical or different, are each an atom or a group of atoms, preferentially an aliphatic group or an aromatic group, and the fifth symbol denotes a direct attachment to Sp, it being known that $X_1$ and $X_5$ are not hydrogen atoms.

**7.** Composition according to any one of the preceding claims, wherein the 1,3-dipolar compound is 2,4,6-trimethyl-3-((2-methyl-1H-imidazol-1-yl)methyl)benzonitrile oxide or 2,4,6-triethyl-3-((2-methyl-1H-imidazol-1-yl)methyl)benzonitrile oxide, preferably 2,4,6-trimethyl-3-((2-methyl-1H-imidazol-1-yl)methyl)benzonitrile oxide.

**8.** Composition according to any one of the preceding claims, wherein the content of the 1,3-dipolar compound is between 0.1 and 3 molar equivalents, preferentially between 0.1 and 2 molar equivalents, of imidazole ring per 100 mol of monomer units constituting the copolymer.

**9.** Composition according to any one of the preceding claims, wherein the radical polymerization initiator is an organic peroxide selected from the group consisting of dicumyl peroxide, aryl or diaryl peroxides, diacetyl peroxide, benzoyl peroxide, dibenzoyl peroxide, di(tert-butyl) peroxide, tert-butyl cumyl peroxide, 2,5-bis(tert-butylperoxy)-2,5-dimethylhexane, n-butyl 4,4'-di(tert-butylperoxy)valerate, OO-(t-butyl) O-(2-ethylhexyl) monoperoxycarbonate, tert-butyl peroxyisopropyl carbonate, tert-butyl peroxybenzoate, tert-butyl peroxy-3,5,5-trimethylhexanoate, 1,3(4)-bis(tert-butylperoxyisopropyl)benzene and mixtures thereof, preferably from the group consisting of dicumyl peroxide, n-butyl 4,4'-di(tert-butylperoxy)valerate, OO-(t-butyl) O-(2-ethylhexyl) monoperoxycarbonate, tert-butyl peroxyisopropyl carbonate, tert-butyl peroxybenzoate, tert-butyl peroxy-3,5,5-trimethylhexanoate, 1,3(4)-bis(tert-butylperoxyisopropyl)benzene and mixtures thereof.

**10.** Composition according to any one of the preceding claims, wherein the content of radical polymerization initiator is within a range extending from 0.1 to 3 phr, preferably from 0.2 to 2.5 phr.

**11.** Composition according to any one of the preceding claims, wherein the co-crosslinking agent comprises an acrylate derivative of formula (VIII):

$$[X]_p\ A \qquad \text{(VIII)}$$

in which:

◦ [X]p corresponds to a radical of formula (IX):

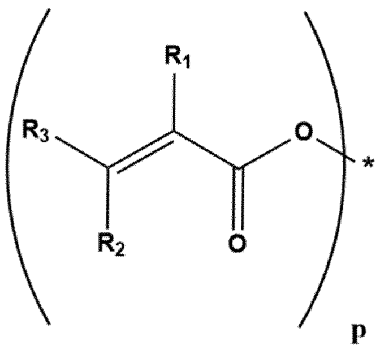

(IX)

in which:

• $R_1$, $R_2$ and $R_3$ independently represent a hydrogen atom or a $C_1$-$C_8$ hydrocarbon group selected from the group consisting of alkyl groups which are linear, branched or cyclic, alkylaryl groups, aryl groups and aralkyls, and which are optionally interrupted by one or more heteroatoms, it being possible for $R_2$ and $R_3$ together to form a non-aromatic ring,
• (*) represents the point of attachment of the radical of formula (IX) to A,

◦ A represents an atom belonging to the group consisting of alkaline earth metals or transition metals, a carbon atom or a $C_1$-$C_{30}$ hydrocarbon group, optionally interrupted and/or substituted by one or more heteroatoms,
◦ A comprising p free valencies, p having a value ranging from 2 to 6,
◦ it being understood that the 2 to 6 X radicals are identical or different.

**12.** Composition according to Claim 11, wherein, in the acrylate derivative of formula (VIII):

◦ A represents an atom belonging to the group consisting of alkaline earth metals and transition metals, a carbon atom or a $C_1$-$C_{13}$ hydrocarbon group,
◦ A comprising p free valencies, p having a value ranging from 2 to 4,
◦ it being understood that the 2 to 4 X radicals are identical or different.

**13.** Composition according to Claim 11 or 12, wherein $R_1$, $R_2$ and $R_3$ represent, independently of one another, a hydrogen atom, a methyl group or an ethyl group.

**14.** Composition according to any one of the preceding claims, wherein the content of co-crosslinking agent is within a range extending from 1 to 20 phr, preferably from 2 to 10 phr, preferably between 2 and 5 phr.

**15.** Pneumatic or non-pneumatic tyre comprising a composition as defined in any one of Claims 1 to 14, preferably present in the tread of the tyre.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 501227 A
- EP 692492 A
- EP 692493 A
- EP 735088 A
- EP 767206 A
- EP 786493 A
- EP 881252 A
- WO 9902590 A
- WO 9902601 A
- WO 9902602 A
- WO 9906480 A
- WO 0005300 A
- WO 0005301 A
- WO 2020094993 A
- EP 1092731 A
- WO 2004035639 A
- WO 2007054223 A
- WO 2007054224 A
- WO 2017093654 A1
- WO 2018020122 A1
- WO 2018020123 A1
- WO 03016215 A1
- WO 03016387 A1
- WO 02083782 A
- WO 0230939 A
- WO 0231041 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 2010072685 A
- WO 2008055986 A
- WO 9736724 A
- WO 9916600 A
- WO 200222688 A1
- FR 2899808 A1
- WO 0210269 A
- EP 0501227 A
- EP 0735088 A
- EP 0810258 A


### Littérature non-brevet citée dans la description


- **BRUNAUER-EMMETT-TELLER.** *The Journal of the American Chemical Society,* Février 1938, vol. 60, 309
- **DENISOV et al.** Handbook offree radical initiators. John Wiley & Sons, 2003
- **LLAURO M. F. ; MONNET C. ; BARBOTIN F. ; MONTEIL V. ; SPITZ R ; BOISSON C.** Investigation of ethylene/butadiene copolymers microstructure by H and C NMR. *Macromolecules,* 2001, vol. 34, 6304-6311
- **ZENKEVICH, I. G. ; MAKAROV, A. A.** *Russian Journal of General Chemistry,* 2007, vol. 77 (4), 611-619
- *Zhurnal Obshchei Khimii,* 2007, vol. 77 (4), 653-662
- **YAKUBOV, A. P. ; TSYGANOV, D. V. ; BELEN'KII, L. I. ; KRAYUSHKIN, M. M.** *Bulletin of the Academy of Sciences of the USSR, Division of Chemical Science,* 1991, vol. 40 (7.2), 1427-1432
- *Izvestiya Akademii Nauk SSSR, Seriya Khimicheskaya,* 1991, (7), 1609-1615